# EUROPEAN PATENT SPECIFICATION

(11) **EP 3 724 467 B1**
(45) Date of publication and mention of the grant of the patent: **26.07.2023**
(21) Application number: 18889474.5
(22) Date of filing: 13.12.2018
(51) Int. Cl.: F01M 1/08, F01M 1/16, F16N 7/34, F16N 7/38, F16N 13/16

(54) **A LARGE SLOW-RUNNING TWO-STROKE ENGINE AND A METHOD OF LUBRICATING IT**
GROSSER LANGSAM LAUFENDER ZWEITAKTMOTOR UND VERFAHREN ZU SEINER SCHMIERUNG
GROS MOTEUR À DEUX TEMPS LENT ET PROCÉDÉ DE LUBRIFICATION DE CELUI-CI

(30) Priority: 13.12.2017 DK PA201770938
(43) Date of publication of application: 21.10.2020
(73) Proprietor: Hans Jensen Lubricators A/S, 9560 Hadsund (DK)
(72) Inventor: BAK, Peer, 9300 Sæby (DK)
(74) Representative: Patrade A/S
(86) International application number: PCT/DK2018/050355
(87) International publication number: WO 2019/114905

(56) References cited:
- EP-A2- 1 586 751
- WO-A1-00/28194
- WO-A1-02/35068
- WO-A1-02/35068
- WO-A1-2005/124112
- WO-A1-2005/124112
- WO-A1-2006/089558
- DE-A1-102013 104 821
- DE-A1-102013 104 822
- DK-A1- 201 670 630
- DK-A1- 201 670 630

## Description

### FIELD OF THE INVENTION

The present invention relates to a large slow-running two-stroke engine and a method of lubricating it, in particular according to the preamble in the independent claims.

### BACKGROUND OF THE INVENTION

Due to the focus of on environmental protection, efforts are on-going with respect reduction of emissions from marine engines. This also involves the steady optimization of lubrication systems for such engines, especially due to increased competition. One of the economic aspects with increased attention is a reduction of oil consumption, not only because of environmental protection but also because this is a significant part of the operational costs of ships. A further concern is proper lubrication despite reduced lubricant volume because the longevity of diesel engines should not be compromised by the reduction of oil consumption. Thus, there is a need for steady improvements with respect to lubrication.

For lubricating of large slow-running two-stroke marine diesel engines, several different systems exist, including injection of lubrication oil directly onto the cylinder liner or injection of oil quills to the piston rings. Examples of lubrication systems are disclosed in WO00/28194A1 and EP1586751A2.

An example of a lubricant injector for a marine engine is disclosed in EP1767751, in which a non-return valve is used to provide the lubricant access to the nozzle passage inside the cylinder liner. The non-return valve comprises a reciprocating spring-pressed ball in a valve seat just upstream of the nozzle passage, where the ball is displaced by pressurised lubricant. The ball valve is a traditional technical solution, based on a principle dating back to the start of the previous century, for example as disclosed in GB214922 from 1923.

An alternative and relatively new lubrication method, compared to traditional lubrication, is commercially called Swirl Injection Principle (SIP). It is based on injection of a spray of atomized droplets of lubricant into the scavenging air swirl inside the cylinder. The helically upwards directed swirl results in the lubricant being pulled towards the Top Dead Centre (TDC) of the cylinder and pressed outwards against the cylinder wall as a thin and even layer. This is explained in detail in international patent applications WO2010/149162 and WO2016/173601. The injectors comprise an injector housing inside which a reciprocating valve member is provided, typically a valve needle. The valve member, for example with a needle tip, closes and opens the lubricant's access to a nozzle aperture according to a precise timing. In current SIP systems, a spray with atomized droplets is achieved at a pressure of, typically, 35-40 bars, which is substantially higher than the oil pressure of less than 10 bars that are used for systems working with compact oil jets that are introduced into the cylinder. In some types of SIP valves, the high pressure of the lubricant is also used to move a spring-loaded valve member against the spring force away from the nozzle aperture such that the highly pressurised oil is released therefrom as atomized droplets. The ejection of oil leads to a lowering of the pressure of the oil on the valve member, resulting in the valve member returning to its origin and remaining there until the next lubricant cycle where highly pressurized lubricant is supplied to the lubricant injector again.

In such large marine engines, a number of injectors are arranged in a circle around the cylinder, and each injector comprises one or more nozzle apertures at the tip for delivering lubricant jets or sprays into the cylinder from each injector. Examples of SIP lubricant injector systems in marine engines are disclosed in international patent applications WO2002/35068, WO2004/038189, WO2005/124112, WO2010/149162, WO2012/126480, WO2012/126473, WO2014/048438, and WO2016/173601.

For SIP injection, a precisely controlled timing is essential in addition to the objective of minimizing oil consumption. For this reason, SIP systems are specially designed for quick reactive response during injection-cycles.

International patent application WO2011/110181 discusses the importance of precise lubricant dosing in a lubrication systems of marine engines. For the precise timing of the dosing, a double valve system is disclosed for separate control of opening and closing time of the lubricant injector, allowing the system to be adjusted to a short dosing period. However, precise adjustment of the dosing period is not sufficient for a precise dosing volume, as the dispensed volume is not only defined by the length of the time of dispensing but also depends on the pressure of the lubricant as well as on the viscosity, which, in turn, depends on the temperature.

WO02/35068 discloses an injector that contains a pumping system, in which a reciprocal plunger-member is moved forwards towards the nozzle in an injection phase, for thereby causing pressure rise in a predetermined lubricant volume inside the injector and for pumping this predetermined lubricant volume through the nozzle aperture. This pumping system is activated by high pressure oil which is fed to the injector from the controller. The controller feeds the high pressure oil centrally to all injectors. Each injector has a controllable motor-driven actuator for adjustment of the stroke length for the reciprocal plunger. Such a system is simple in that it regulates the injection centrally by the high pressure oil delivery from the controller the adjustment works identical for all injectors with respect to the timing and frequency for the injection. However, such injector is relatively complex and costly in that each injector comprises a motorised volume adjustment regulation system. Also, the fact that a motor is provided for each injector increases the risk for failure, not only due to the motor itself but also due to the risk for heat and mechanical damage to the necessary electrical cabling. It would be desirable to provide a more robust system.

### DESCRIPTION / SUMMARY OF THE INVENTION

It is therefore the objective of the invention to provide an improvement in the art. A particular objective is to provide a robust injection system. Especially, it is the objective to improve lubrication with SIP valves in a large slow-running two-stroke engine. One or more of these objectives are achieved by a large slow-running two-stroke engine and method as described in the following, as well as by a controller for the engine and method.

The large slow-running two-stroke engine comprises a cylinder with a reciprocal piston inside and with a plurality of injectors distributed along a perimeter of the cylinder for injection of lubricant into the cylinder at various positions on the perimeter during injection phases. For example, the large slow-running two-stroke engine is a marine engine or a large engine in power plants. Typically, the engine is burning diesel or gas fuel.

The engine further comprises a controller. The controller is configured for controlling the amount and timing of the lubricant injection by the injectors during an injection phase. Optionally, also the injection frequency is controlled by the controller. For precise injection, it is an advantage if the controller is electronically connected to a computer or comprises a computer, where the computer is monitoring parameters for the actual state and motion of the engine. Such parameters are useful for the control of optimized injection. Optionally, the controller is provided as an add-on system for upgrade of already existing engines. A further advantageous option is a connection of the controller to a Human Machine Interface (HMI) which comprises a display for surveillance and input panel for adjustment and/or programming of parameters for injection profiles and optionally the state of the engine. Electronic connections are optionally wired or wireless or a combination thereof.

The term "injector" is used for an injection valve system comprising a housing with a lubricant inlet and one single injection nozzle with a nozzle aperture as a lubricant outlet and with a movable member inside the housing, which opens and closes access for the lubricant to the nozzle aperture. Although, the injector has a single nozzle that extends into the cylinder through the cylinder wall, when the injector is properly mounted, the nozzle itself, optionally, has more than a single aperture. For example, nozzles with multiple apertures are disclosed in WO2012/126480.

The term "injection phase" is used for the time during which lubricant is injected into the cylinder by an injector. The term "idle phase" is used for the time between injection phases. The term "injection-cycle" is used for the time it takes to start an injection sequence and until the next injection sequence starts. For example, the injection sequence comprises a single injection, in which case the injection-cycle is measured from the start of the injection phase to the start of the next injection phase. The term "timing" of the injection is used for the adjustment of the start of the injection phase by the injector relatively to a specific position of the piston inside the cylinder. The term "frequency" of the injection is used for the number of repeated injections by an injector per revolution of the engine. If the frequency is unity, there is one injection per revolution. If the frequency is 1/2, there is one injection per every two revolutions. This terminology is in line with the above mentioned prior art.

In a practical embodiment, the housing of the injector comprises a base with a lubricant inlet port for receiving lubricant and comprises a flow chamber, typically a rigid cylindrical flow chamber, which rigidly connects the base with the nozzle. The flow chamber is hollow and, thus, allows lubricant to flow inside the flow chamber from the base to the nozzle. When the injector is mounted, the flow chamber extends through the cylinder wall of the engine so that the nozzle is held rigidly inside the cylinder by the flow chamber. Due to the base being provided at the opposite end of the flow chamber, it is typically located on or at the outer side of the cylinder wall. For example, the injector comprises a flange at the base for mounting onto the outer cylinder wall.

In order to solve the problem and achieve the objectives of a more robust system than in WO02/35068, the stroke length for the reciprocal plunger in the injector is adjusted hydraulically, instead of a motorised adjustment as in the injector of WO02/35068. An advantage of the hydraulic stroke length adjustment is that it can be provided by a central controller, where the controller simultaneously adjusts the stroke length for all injectors in one or more cylinders or only in a sub-group of a cylinder's injectors. The disadvantage of cable failure for single injectors as in WO02/35068 is avoided. On the other hand, the hydraulic stroke length adjustment can, in principle, also be provided for each single injector, yielding high degrees of freedom for adjustment to the actual needs. The principles are described in more detail in the following.

The engine comprises a lubricant feed conduit containing lubricant at a first pressure. As will become more apparent in the following, the lubricant from the feed conduit is injected in portions into the cylinder by the injectors. The engine further comprises a pressure-control conduit containing pressure-liquid at a pressure higher than the first pressure. As will become more apparent in the following, the injector comprises an internal hydraulic-driven pumping system where the pressure-liquid is used for driving the pumping system inside the injector housing by which the lubricant is pressurized in the injector and ejected therefrom.

The injector comprises a lubricant inlet port, flow-connected to the lubricant feed conduit for receiving lubricant from it for injection into the cylinder. The injector also comprises a pressure-control port, flow-connected to the pressure-control conduit for receiving pressure-liquid therefrom in the injection phase. A nozzle of the injector is provided with a nozzle aperture which, when mounted in the engine, extends into the cylinder for injecting lubricant from the inlet port into the cylinder in the injection phase.

Each of the injectors comprises an outlet-valve system at the nozzle configured for opening for flow of lubricant to the nozzle aperture during an injection phase upon pressure rise above a predetermined limit at the outlet-valve system and for closing the outlet-valve system after the injection phase. The outlet-valve system closes off for back-pressure from the cylinder and also prevents lubricant to enter the cylinder unless the outlet-valve is open. In addition, the outlet-valve system assists in a short closing time after injection, adding to precision in timing and volume of injected lubricant.

For example, the outlet-valve system comprises an outlet non-return valve. In the outlet non-return valve, the outlet-valve member, for example a ball, ellipsoid, plate, or cylinder, is pre-stressed against an outlet-valve seat by an outlet-valve spring. Upon provision of pressurised lubricant in a flow chamber upstream of the outlet-valve system, the pre-stressed force of the spring is counteracted by the lubricant pressure, and if the pressure is higher than the spring force, the outlet-valve member is displaced from its outlet-valve seat, and the outlet non-return valve opens for injection of lubricant through the nozzle aperture into the cylinder. For example, the outlet-valve spring acts on the valve member in a direction away from the nozzle aperture, although, an opposite movement is also possible.

For example, the predetermined limit is a pressure in the range of 20-100 bar for SIP injection.

The injector comprises a front chamber inside the injector between the lubricant inlet port and the outlet-valve system for receiving and accumulating a pre-determined volume of lubricant from the inlet port prior to an injection phase.

A pressure chamber in the injector is in communication with the pressure-control port for receiving the pressure-liquid from the pressure-control port in the injection phase. The pressure-liquid in the pressure chamber drives a pumping system in the injector. The pumping system comprises a reciprocal hydraulic-driven actuator-plunger in contact with the pressure chamber and pre-stressed by a spring-load from an actuator-plunger spring and configured for being driven, for example in a direction towards the nozzle, by the pressure-liquid in the pressure chamber in the injection phase, by which it is causing pressure rise in the lubricant in the front chamber above the predetermined limit and causes pumping of this predetermined lubricant volume through the non-return valve and the nozzle aperture into the cylinder.

The injection-cycle is repeated during operation of the engine. In the injection phase, pressure-liquid is provided at the pressure-control port of the injector and from there flowing into the pressure chamber, such that the pressure-liquid is exerting force on the actuator-plunger and driving it into motion that causes pressure rise above the predetermined limit in the front chamber and pumping of the predetermined lubricant volume from the front chamber through the non-return valve and the nozzle aperture into the cylinder. After the injection phase, the actuator-plunger is retracted by draining pressure-liquid from the pressure chamber. Lubricant at the inlet port of the injector is used for replenishing the predetermined lubricant volume between the injection phases during the retraction for the next injection phase.

However, in order to regulate the stroke length, the amount of the pressure-liquid drained from the pressure chamber is variably adjustable between injection phases by a stroke length adjustment mechanism. By not draining all the pressure-liquid from the pressure chamber between the injection phases, the actuator-plunger is not fully retracted to the maximum possible retraction position. As the stroke of the actuator-plunger is always to the same position, for example the same most-forward position, varying the retraction position of the actuator-plunger after retraction regulates the stroke length. In some embodiments, the maximum possible retraction position of the actuator-plunger is the most rearward possible position at maximum distance from the nozzle aperture, and by not draining only a portion of the pressure-liquid from the pressure chamber, this most rearward possible position is not attained, but the actuator-plunger held at a distance from the most rearward possible position. By regulating the amount of the pressure liquid that is drained from the pressure chamber after the injection phase, also the injection volume for the next injection is regulated, as the stroke length is reduced relatively to the maximum possible retraction position. The effect is similar to the screw-adjustable end-stop in WO02/35068, however, the stroke length adjustment mechanism can be provided centrally and remotely from the injector, which is in contrast to the injector of WO02/35068.

In some practical embodiments, the stroke length adjustment mechanism comprises a pressure regulator for variably regulating an idle-pressure in the pressure chamber between the injection phases, wherein the idle-pressure is lower than the predetermined limit for only partly counteracting the spring-load from the actuator-plunger spring on the actuator-plunger and thereby variably adjusting the retracted position for the actuator-plunger.

By adjusting the pressure in the pressure chamber by a pressure regulator between the injection phases, it is possible to maintain a certain portion of pressure-liquid in the pressure chamber at lower pressure than during injection, despite the retraction force of the spring-load. This lower pressure counteracts the spring-load, which is dependent on the compression of the spring and, thus, by the position of the actuator-member and the plunger-member. Accordingly, the actuator-member and the plunger-member are offset from the maximum possible retraction position, for example most rearward position, by a distance which is determined by a balance between the lower pressure in the pressure chamber and the counteracting force from the spring at the offset distance. For example, the actuator-plunger is spring-loaded in a direction away from the nozzle.

By variably adjusting the pressure by the pressure regulator, the offset distance can be varied. The pressure would be lower than the pressure necessary for injection but higher than the pressure that the spring is able to counteract when pushing the plunger-member to its the maximum possible retraction position for example most rearward position.

For example, the injection pressure is 37 bar and the spring-load is able to press the plunger-member to its rearwards position if the pressure in the pressure chamber is less than 10 bar. By adjusting the pressure in the pressure chamber to a value higher than 10 and less than 37 bar, the stroke length of the plunger-member can be adjusted.

For example, the engine comprises a return conduit configured for draining the pressure-liquid from the pressure-control port through the pressure-control conduit between injection phases. The pressure in the return conduit is lower than the injection pressure. Typically, the pressure in the return conduit is lower than the pressure that is necessary in the pressure chamber to keep the actuator-plunger offset from the maximum possible retraction position. In other words, if the pressure-liquid in the pressure chamber is drained into the return conduit, the remaining pressure in the pressure-chamber would not balance the actuator-spring force, which instead would press the actuator-plunger into the maximum possible retraction position, for example most rearwards position.

However, by inserting the adjustable pressure regulator, for example as part of an adjustable pressure valve, between the pressure chamber and the return conduit, the pressure in the pressure-chamber can be kept at a higher level than in the return conduit. In practical embodiments, the adjustable pressure valve is liquid-flow connecting the pressure-control conduit with the return conduit of the engine between injection phases in order to drain the pressure-liquid from the pressure chamber serially through the pressure-control port, the pressure-control conduit, the adjustable pressure valve with the adjustable pressure regulator and into the return conduit.

Optionally, the engine comprises a lubricant supply conduit. For example, the supply conduit and the return conduit are part of a lubricant circulation system of the engine, and the lubricant feed conduit is flow-connected to the return conduit for providing lubricant from the return conduit to the inlet port of the injector for injection into the cylinder. On the other hand, due to the higher pressure in the supply conduit as compared to the pressure in the feed conduit and return conduit, the supply conduit can be used to feed lubricant from the engine at as pressure-liquid to the pressure-control conduit and the pressure control port.

Advantageously, a valve system is used for supplying pressure liquid intermittently to the pressure-control port and into the pressure chamber for the injection cycles. An example is a toggle-valve as follows. The toggle-valve comprises a toggle-valve inlet port connected to a supply conduit, a toggle-valve outlet port connected to the pressure-control conduit, a toggle-valve return port connected to the return conduit through the adjustable pressure valve, and a toggle member arranged for toggling between a first state, where the toggle-valve inlet port and the toggle-valve outlet port are communicating for flow of pressure-liquid from the supply conduit through the toggle-valve and through the pressure-control conduit to the pressure-control port, and a second state, where the toggle-valve outlet port and the toggle-valve return port are communicating for drain of pressure-liquid from the pressure-control conduit through the toggle-valve to the toggle-valve return port, through the adjustable pressure valve and to the return conduit. Advantageously, the toggle-valve return port is connected to the return conduit through the adjustable pressure valve. In cyclic operation, the toggle member is togged between a first state in the injection phase and the second state in the idle phase, which is between injection phases.

As mentioned above, advantageously, the engine comprises a controller for controlling the amount and timing of the lubricant injection by at least one of the injectors, although, typically, for a subgroup of injectors or for all injectors of a cylinder or even for injectors in all cylinders.

In some embodiments, this controller comprises the stroke length adjustment mechanism and is, advantageously, provided remotely from the injector. Typically, the controller is used for a group of injectors, for example for all injectors around a cylinder In this case, the controller is used for controlling provision and drain of pressure-liquid into and out of the pressure-control conduit during an injection-cycle.

In broad terms, the controller is configured for feeding pressure liquid to the injector for hydraulically driving a pumping system in the lubricant injector, wherein the controller comprises a stroke length adjustment mechanism for adjusting a stroke length of an actuator-plunger in the hydraulic-driven pumping system in the lubricant injector, wherein the stroke length adjustment mechanism in the controller is configured for variable adjustment of the amount of pressure-liquid that is drained from the hydraulic-driven pumping system of the injector between injection phases.

As mentioned earlier, the controller can be provided as an add-on system for an engine as described above. For such case, the controller is provided with respective conduit-connectors for connecting the controller to the lubricant circulation system and the conduits for connection to the injector or injectors.

For example, the controller comprises a computer, or the controller is connected by an electronic wired or wireless connection to a computer, where the computer is of the type that is configured for monitoring parameters for the actual state and motion of the engine, and the controller with the computer is configured for controlling the amount and timing of the lubricant injection by at least one lubricant injector on the basis of the parameters.

In some embodiments, the injector comprises a rigid lubricant conduit communicating with the lubricant inlet port and with the nozzle for flow of lubricant from the inlet port to the nozzle. The lubricant conduit comprises the front chamber at the nozzle and a rear chamber remote from the nozzle, wherein the rear chamber is communicating with the inlet port, the front chamber containing the predetermined lubricant volume and having a variable size determined by the position of the actuator-plunger; wherein the injector comprises a valve between the front chamber and the rear chamber. The valve is configured for flow-connecting the front chamber with the rear chamber between injection phases for flow of lubricant from the rear chamber to the front chamber and configured for disconnecting the front chamber from the rear chamber in the injection phase. This disconnection is preventing back-flow of lubricant from the front chamber when lubricant is pressurized in the front chamber and expelled from the front chamber through the nozzle aperture by the motion of the actuator-plunger.

For example, the valve is a non-return valve, which is held closed by the pressure in the front chamber during pressurizing of the predetermined lubricant volume during forward motion of the actuator-plunger in the injection phase. The valve is then opened again by pressure reduction in the front chamber due to retraction of the plunger-member, thereby causing suction of lubricant from the rear chamber into the front chamber for re-filling the front chamber during the retraction. This way, the valve is a suction valve.

It is pointed out that not necessarily all of the lubricant in the front chamber is ejected. Therefore, there is differentiated between the total volume of the front chamber and the predetermined lubricant volume in the front chamber, as the latter is typically less than the total volume of the front chamber. During pressurization, the total volume of lubricant in the front chamber is pressurized, however, during injection, typically, only part of the total lubricant volume in the front chamber is ejected therefrom.

In some practical embodiments, the actuator-plunger comprises a reciprocal actuator-member and a separate reciprocal plunger-member in extension of the actuator-member and configured for being pushed by the actuator-member and for moving together with the actuator-member. The actuator-plunger spring comprises an actuator-spring, which is in contact with the actuator-member, and a plunger spring, which is in contact with the plunger-member. The actuator-member is pre-stressed towards the pressure chamber by a spring-load from the actuator-spring and is in contact with the pressure chamber and is driven by the pressure-liquid in the pressure chamber against the spring-load from the actuator-spring in the injection phase. The plunger-member is pre-stressed towards the actuator-member by spring-load from the plunger spring and is in contact with the front chamber. It causes pressure rise in the lubricant in the front chamber above the predetermined limit by its motion in the injection phase when pushed by the actuator-member against the spring-load from the plunger spring. Optionally, the valve is provided in the actuator-plunger. This separation of the actuator-plunger into an actuator-member and a separate plunger-member separates also additional functions, namely the actuator-member acting as an adjustable rearward end-stop for the plunger-member, while the plunger-member performs the pumping function.

In case that the outlet-valve system comprises a non-return valve in the nozzle, and the non-return valve comprises a valve member, for example ball, which is spring pressed against a valve seat, a high degree of robustness against failure has been observed. These systems are simple, and the risk for clogging is minimal. Also, the valve seats tend to be self-cleaning and subject to little uneven wear, especially for valve members being balls, why a high and long-term reliability is provided. Accordingly, the injector is simple and reliable, quick and precise, and easy to construct from standard components with low production costs.

For example, the injectors comprise a nozzle with a nozzle aperture of between 0.1 and 1 mm, for example between 0.2 and 0.5mm, and are configured for ejecting a spray of atomized droplets, which is also called a mist of oil.

A spray of atomized droplets is important in SIP lubrication, where the sprays of lubricant are repeatedly injected by the injectors into the scavenging air inside the cylinder prior to the piston passing the injectors in its movement towards the TDC. In the scavenging air, the atomized droplets are diffused and distributed onto the cylinder wall, as they are transported in a direction towards the TDC due to a swirling motion of the scavenging air towards the TDC. The atomization of the spray is due to highly pressurized lubricant in the lubricant injector at the nozzle. The pressure is higher than 10 bars, typically between 25 bar and 100 bar for this high pressure injection. An example is an interval of between 30 and 80 bars, optionally between 35 and 60 bars. The injection time is short, typically in the order of 5-30 milliseconds (msec). However, the injection time can be adjusted to 1 msec or even less than 1 msec, for example down to 0.1 msec. Therefore imprecisions of only a few msec may alter the injection profile detrimentally, why high precision is required, as already mentioned above, for example a precision of 0.1 msec.

Also, the viscosity influences the atomization. Lubricants used in marine engines, typically, have a typical kinematic viscosity of about 220 cSt at 40°C and 20 cSt at 100°C, which translates into a dynamic viscosity of between 202 and 37 mPa·s. An example of a useful lubricant is the high performance, marine diesel engine cylinder oil ExxonMobil^{®} Mobilgard^{™} 560VS. Other lubricants useful for marine engines are other Mobilgard^{™} oils as well as Castrol^{®} Cyltech oils. Commonly used lubricants for marine engines have largely identical viscosity profiles in the range of 40-100°C and are all useful for atomization, for example when having a nozzle aperture diameter of 0.1-0.8 mm, and the lubricant has a pressure of 30-80 bars at the aperture and a temperature in the region of 30-100°C or 40-100°C. See also, the published article on this subject by Rathesan Ravendran, Peter Jensen, Jesper de Claville Christiansen, Benny Endelt, Erik Appel Jensen, (2017) "Rheological behaviour of lubrication oils used in two-stroke marine engines", Industrial Lubrication and Tribology, Vol. 69 Issue: 5, pp.750-753, https://doi.org/10.1108/ILT-03-2016-0075.

### SHORT DESCRIPTION OF THE DRAWINGS

The invention will be explained in more detail with reference to the drawing, where
- FIG. 1: is a sketch of part of a cylinder in an engine;
- FIG. 2: is a drawing of an embodiment of the injector;
- FIG. 3: is illustrating an embodiment of the controller with a) a first and b) a second embodiment;
- FIG. 4: illustrates an alternative example of a nozzle.

### DETAILED DESCRIPTION / PREFERRED EMBODIMENT

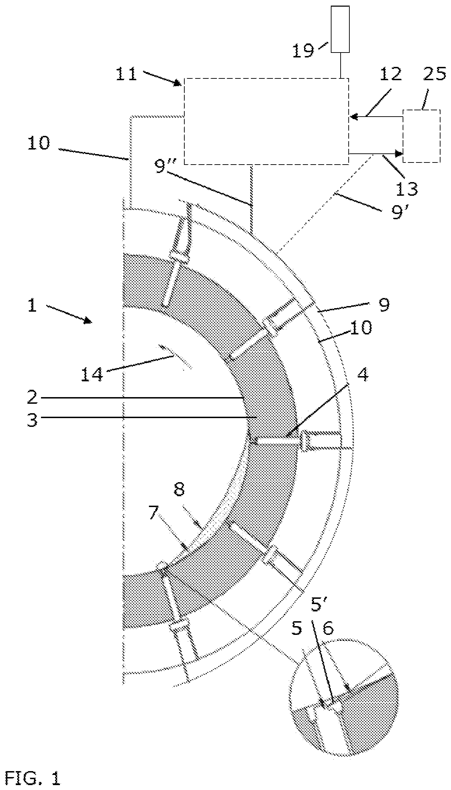

FIG. 1 illustrates one half of a cylinder 1 of a large slow-running two-stroke engine, for example marine diesel engine. The cylinder 1 comprises a cylinder liner 2 on the inner side of the cylinder wall 3. Inside the cylinder wall 3, there are provided a plurality of injectors 4 for injection of lubricant into the cylinder 1. As illustrated, the injectors 4 are distributed along a circle with the same angular distance between adjacent injectors 4, although this is not strictly necessary. Also, the arrangement along a circle is not necessary, seeing that an arrangement with axially shifted injectors is also possible, for example every second injector shifted towards the piston's top dead centre (TDC) relatively to a neighbouring injector.

Each of the injectors 4 has a nozzle 5 with a nozzle aperture 5' from which a fine atomized spray 8 with miniature droplets 7 is ejected under high pressure into the cylinder 1.

For example, the nozzle aperture 5' has a diameter of between 0.1 and 0.8 mm, such as between 0.2 and 0.5 mm, which at a pressure of 10-100 bars, for example 25 to 100 bars, optionally 30 to 80 bars or even 50 to 80 bars, atomizes the lubricant into a fine spray 8, which is in contrast to a compact jet of lubricant. The swirl 14 of the scavenging air in the cylinder 1 transports and presses the spray 8 against the cylinder liner 2 such that an even distribution of lubrication oil on the cylinder liner 2 is achieved. This lubrication system is known in the field as Swirl Injection Principle, SIP.

However, also other principles are envisaged in connection with the improved lubrication system, for example injectors that have jets directed towards the cylinder liner.

Optionally, the cylinder liner 2 is provided with free outs 6 for providing adequate space for the spray 8 or jet from the injector 4.

In addition to the lubricant feed conduit 9, the injectors 4 are connected to the controller 11 by a pressure-control conduit 10. The lubricant feed conduit 9 is used for providing lubricant for injection. The pressure-control conduit 10 provides oil at high pressure to activate an internal pumping system inside the injector 4, which will be explained in more detail in the following.

The pressure in the pressure-control conduit 10 is higher than the pressure in the lubricant feed conduit 9. Typically, the lubricant pressure in the lubricant feed conduit 9 is in the range of 1-15 bar, for example in the range of 5-15 bar, and the oil pressure in the pressure-control conduit 10 is in the range 20-100 bar, for example in the range 30-80 bar, optionally 50-80 bar.

The controller 11 is connected to a supply conduit 12 for receiving lubricant from a lubricant supply 25, including an oil pump, and a return conduit 13 for return of lubricant, typically to an oil reservoir, optionally for recirculation of lubricant. The lubricant pressure in the supply conduit 12 is higher than the pressure in the return conduit 13, for example at least two times higher.

The controller 11 supplies lubrication oil to the injectors 4 in precisely timed pulses, synchronised with the piston motion in the cylinder 1 of the engine. For example, for the synchronisation, the controller system 11 is electronically by wires or wireless connected to a computer 19 which controls components in the controller 11 for the lubrication supply. Potentially, the computer 19 is part of the controller 11, for example provided inside a single casing with the other components of the controller 11. Optionally, the computer monitors parameters for the actual state and motion of the engine, for example speed, load, and position of the crankshaft, the latter revealing the position of the pistons in the cylinders.

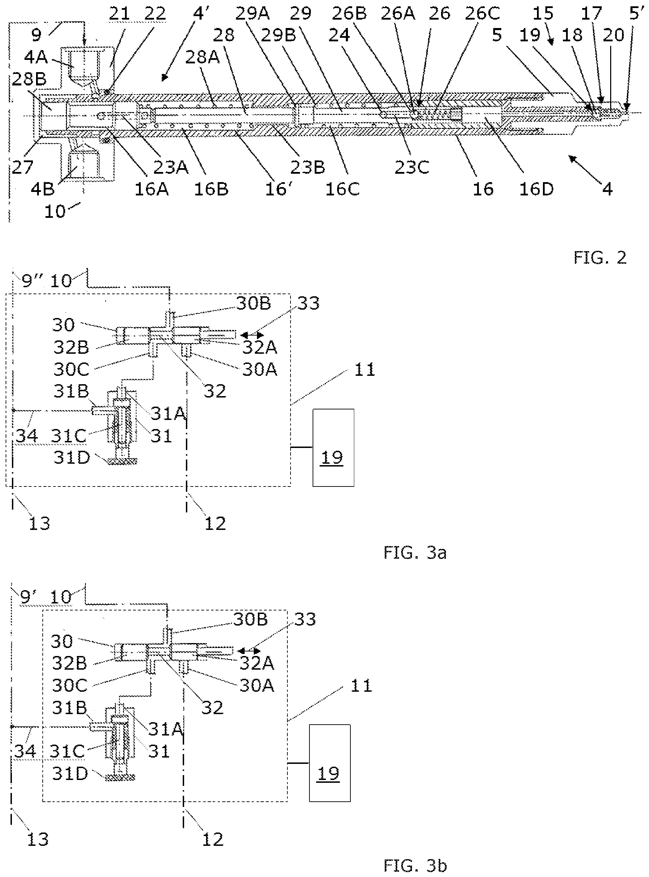

FIG. 2 illustrates an injector 4, and FIG. 3a and 3b illustrate some potential embodiments of the controller 11 in greater detail. The dimensions are not to scale.

The injector 4 comprises an injector housing 4' with an injector base 21 having a lubricant inlet port 4A for receiving lubricant from the lubricant feed conduit 9 and a pressure port 4B connected to the pressure-control conduit 10 for causing ejection of lubricant by the injector 4.

A flow chamber 16, as part of the injector housing 4', holds the nozzle 5 relatively to the injector base 21. In the shown embodiment, the flow chamber 16 is provided as a hollow rigid rod. The flow chamber 16 is sealed against the injector base 21 by an O-ring 22 and held tightly against the injector base 21. A conduit 16' is provided as a hollow channel inside the flow chamber 16 from the rear to the front of the flow chamber 16. The conduit 16' communicates with the lubricant inlet port 4A and with the nozzle 5 through a rear chamber 16A, a first intermediate chamber 16B, a second intermediate chamber 16C, and front chamber 16D.

The injector 4 also comprises an outlet-valve system 15 for regulating the lubricant that is dispensed through the nozzle aperture 5'. Only if the pressure exceeds a predetermined pressure at the outlet-valve system 15, the outlet-valve system 15 opens for ejection of the lubricant into the cylinder 1 of the engine. In the embodiment of FIG. 2, the outlet-valve system 15 is exemplified as being part of the nozzle 5, although, this is not strictly necessary.

The outlet-valve system 15 comprises an outlet non-return outlet-valve 17. In the outlet non-return outlet-valve 17, an outlet-valve member 18, exemplified as a ball, is pre-stressed by a spring-load against an outlet-valve seat 19 by an outlet-valve spring 20. Upon provision of pressurised lubricant in the front chamber 16D, the pre-stressed force of the outlet-valve spring 20 is counteracted by the lubricant pressure, and when the pressure gets higher than the spring force, the outlet-valve member 18 is displaced from its outlet-valve seat 19, and the outlet non-return outlet-valve 17 opens for injection of lubricant through the nozzle aperture 5' into the cylinder 1.

As exemplified, the outlet-valve spring 20 acts on the valve member 18 in a direction away from the nozzle aperture 5'. However, the configuration could be different with respect to the direction of the force of the outlet-valve spring 20 on the outlet-valve member 18 relatively to the nozzle aperture 5', as long as the non-return outlet-valve 17 is closing for the supply of lubricant to the nozzle aperture 5' when in an idle state between injection phases. The closing of the non-return outlet-valve 17 in an idle state prevents unintended flow of lubricant from the front chamber 16D through the nozzle aperture 5' into the cylinder 1 between injection phases.

The rear chamber 16A communicates with the inlet port 4A for receiving lubricant from the lubricant feed conduit 9. The rear chamber 16A communicates with the first intermediate chamber 16B through rear channel 23A. The first intermediate chamber 16B communicates with the second intermediate chamber 16C through intermediate channel 23B, which is a cylindrical opening around an actuator-member 28, which will be explained below. The second intermediate chamber 16C communicates with the front chamber 16D through front channel 23C.

For sake of convenience, the term "forward motion" is used for motion towards the nozzle aperture 5' and the oppositely directed motion away from the nozzle aperture 5' is called "rearward motion".

The front chamber 16D is emptied through the nozzle aperture 5' by forward motion of a reciprocal plunger-member 29, which is spring-loaded against the forward motion by a helical plunger spring 29B in the second intermediate chamber 16C. The plunger-member 29 comprises a channel inlet 24 that leads into front channel 23C, which is an internal channel in the plunger-member 29, for example centrally in the plunger-member 29, as indicated. During forward motion of the plunger-member 29, the front channel 23C is closed by a non-return plunger-valve 26. In the shown embodiment, the non-return plunger-valve 26 is exemplified as comprising a plunger-valve ball 26A in a plunger-valve seat 26B, against which the plunger-valve ball 26A is pre-stressed by a plunger-valve spring 26C.

Forward motion of the plunger-member 29 is achieved by forward motion of an actuator-member 28, which presses against the head 29A of the plunger-member 29. The actuator-member 28 is pre-stressed in a rearward direction by a helical actuator-spring 28A in the first intermediate chamber 16B.

In this illustrated exemplary embodiment, the actuator-member 28 and the plunger-member 29 are separate elements, however, they could also be combined as a single actuator-plunger, for example by having the actuator-member 28 at one end of the single element and the plunger-member 29 at the opposite end.

Forward motion of the actuator-member 28 is achieved by pressurized lubricant from the pressure-control port 4B, which presses on the rear part 28B of the actuator-member 28 in pressure chamber 27 so that they move together.

The functioning of the injector 4 is explained in the following in greater detail. When the pressure-control port 4B is provided with pressurized oil, for example in the pressure range of 20-100 bar, the pressurized oil expands the volume of the pressure chamber 27 by pushing on the rear part 28B of the actuator-member 28 and moving the actuator-member 28 forward. As the actuator-member 28 presses against the head 29A of the plunger-member 29, the plunger-member 29 moves forward together with the actuator-member 28 against the force of the actuator-spring 28A and the plunger spring 29B. The forward motion of the plunger-member acts on the lubricant in the front chamber 16D. As the non-return valve 26 prevents the lubricant in the front chamber 16D from escaping backwards, the lubricant in the front chamber 16D is pressurised to the predetermined pressure limit at which the outlet-valve-system system 15 with the non-return outlet-valve 17 opens for ejection of the lubricant from the front chamber 16D through the nozzle aperture 5' into the cylinder 1.

At the end of the injection phase, the oil at the pressure-control port 4B is drained, which causes the actuator-spring 28A and the plunger spring 29B to press back the actuator-member 28 and the plunger-member 29 in a direction away from the nozzle 5. The rearward motion of the plunger-member 29 reduces the pressure in the front chamber 16D, which, in turn, closes the non-return outlet-valve 17 and draws lubricant from the second intermediate chamber 16C through front channel 23C into the front chamber 16D, as the plunger non-return valve 26 is opened by the pressure reduction in the front chamber 16D. This way, the non-return plunger-valve 26 acts as a suction valve because the pressure reduction in the front chamber 16D causes refilling of the front chamber 16D with lubricant by suction through the non-return plunger-valve 26. During this returning motion of the actuator-member 28 and plunger-member 29, lubricant in the second intermediate chamber 16C is replenished from the first intermediate chamber 16B, which is turn is filled by lubricant from the rear chamber 16A that received the lubricant through the lubricant inlet port 4A.

For proper functioning, the lubricant inlet port 4a is provided with lubricant from the lubricant feed conduit 9 at a constant pressure, and the pressure-control port 4B is provided with pressure-oil from the pressure-control conduit 10 intermittently for each injection-cycle. The pressure at the pressure-control port 4B is raised in the injection phase and reduced in the idle state between injection phases.

If the forward force on the actuator-member 28 by the oil pressure in the pressure chamber 27 in the idle state is less than the combined rearward forces from the actuator spring 28A and the plunger spring 29B, the actuator-member 28 and the plunger-member 29 are returned fully to their most rearward possible position, which is the one indicated in FIG. 2. Thus, a full stroke of the plunger-member is achieved by intermittently changing the oil pressure at the pressure-control port 4B between a full pressure and a lower pressure, for example at the pressure of the lubricant in the lubricant supply line 9 or even lower.

However, the actuator-member 28 and the plunger-member 29 can be held offset from the most rearward position by adjusting the pressure at the pressure-control port 4B and in the pressure chamber 27 at an offset pressure level that creates a force on the actuator such that the springs 28A and 29B do not fully elongate during rearward motion of the actuator-member 28 and the plunger-member 29 but are kept slightly compressed. This is possible because the force of the springs 28A and 29B is varying in dependence on the compression length, largely following a linear dependence on the displacement of the actuator-member from the most rearward position. The offset pressure level is smaller than the pressure level necessary to cause the non-return outlet-valve 17 to open for injection.

In principle, the injector 4 can be provided with lubricant at the inlet port 4A from one lubricant source and with pressure-oil or other pressure-liquid from an entirely different source. However, typically, for sake of simplification and convenience, the pressure-oil at the pressure-control port 4B is provided from the same source as the lubricant at the inlet port 4A, however, with increased pressure, for example by use of a pressure intensifier.

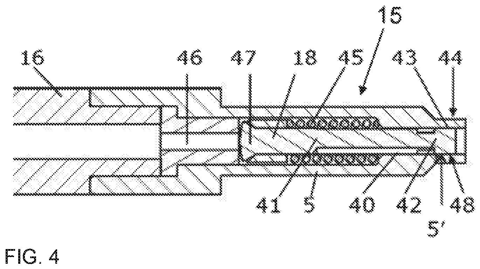

An illustrative example of how the intermittent pressure change at the pressure-control port 4B is achieved is explained in the following with reference to the controller 11, which is illustrated in FIG. 3a and in an alternative embodiment in FIG. 3b. It is pointed out however, that the controllers in FIG. 3a and 3b are only exemplified embodiments, and the injector of FIG. 2 is independent of the illustrated controller 11 of FIG. 3 and 4 and can function with other types of controllers.

In the example of FIG. 3a, the controller 11 comprises a toggle valve 30 that has a toggle-valve inlet port 30A, which is connected to the supply conduit 12, a toggle-valve outlet port 30B, which is connected to the pressure-control conduit 10 for communication with the injector's pressure-control port 4B, and a toggle-valve return port 30C, which is connected to the return conduit 13. Between the toggle-valve return port 30C and the return conduit 13, there is illustrated a pressure-control valve 31, which is explained in greater detail below, and which is optional.

The toggle-valve 30 comprises a first toggle closure element 32A and a second toggle closure element 32B, which are arranged rigidly connected and reciprocal between a first state, where the toggle-valve inlet port 30A and the toggle-valve outlet port 30B are communicating, and a second state, where the toggle-valve outlet port 30B and the toggle-valve return port 30C are communicating. The reciprocal movement is illustrated by arrow 33. In FIG. 3a and 3b, only the second state is illustrated. For example, the toggle-valve 30 is a three-way valve, as illustrated, potentially a magnetic valve.

In the injection phase, the toggle-valve 30 is in the first state, where the highly-pressurised lubricant from the supply conduit 12 is supplied to the pressure-control port 4B of the injector 4 in order to press the actuator-member 29 forward to cause injection of lubricant into the cylinder 1. At the end of the injection phase, the toggle member 30 is moved to the second state, as illustrated, and the lubricant from the pressure-control port 4B is drained through the toggle valve 30, out of the toggle-valve return port 30C into the return line 13, which allows the actuator-member 28 and the plunger-member 29 to return back to the idle state. For example, the toggling of the toggle-member 32 is controlled in cooperation with the computer 19.

As the injector 4 comprises a pumping system upstream of the nozzle 5, namely the plunger-member 29, the lubricant supplied for injection does not need to be provided at high pressure in the feed conduit 9. Therefore, the pressure of the return conduit 13, typically in the range of 5-15 bar, is sufficient for supplying lubricant through the feed conduit 9 to the inlet port 4A of the injector 4.

An optional injection volume-adjustment mechanism is also illustrated in FIG. 2 in combination with FIG. 3a and 3b. In this embodiment, a pressure-valve 31 is provided with a pressure-valve inlet port 31A, connected to the toggle-valve return port 30C, and a pressure-valve outlet port 31B, connected to the return conduit 13. This implies that the toggle-valve return port 31B is connected to the return conduit 13 only through the pressure-valve 31, which is used to adjust the return pressure at the toggle-valve return port 30C.

In the exemplified embodiment, the pressure-valve 31 comprises a spring-loaded pressure adjustment member 31C, the pre-tension of which is adjustable by a pre-tensioner 31D, for example a screw, as illustrated. Although, it is possible to configure the pre-tensioner for manual adjustment, typically, the pre-tensioner is adjusted by a motor or other type of actuator. The adjustment of the pre-tensioner causes more or less pre-tension on the spring-loaded pressure adjustment member 31C, such that the back-pressure at the pressure-valve inlet port 31A and at the toggle-valve return port 30C is adjusted by this pre-tension.

The adjusted back pressure at the toggle-valve return port 30C determines the lowest pressure at the pressure-control port 4B. Increasing this back-pressure offsets the actuator-member 28 and the plunger-member 29 from the most rearward position. As the next injection phase starts the forward motion from this offset position, the stroke of the plunger-member 29 is shorter that it would be when starting from the most rearward position. Thus, by adjusting the back-pressure by the pressure-valve 31, the stroke of the injector 4 is precisely regulated, and correspondingly the amount of the lubricant that is injected into the cylinder 1. In FIG. 2, the most rearward position of the actuator-member 28 and the plunger-member 29 is indicated.

Typically, there is provided one toggle-valve 30 for a group of injectors, for example all injectors of a cylinder. However, in an alternative embodiment, there is provided one toggle-valve 30 for each injector 4. In case that the optional pressure-valve 31 is included in the system in order to adjust the stroke of the plunger-member 29 and the injection volume, it is, typically, provided for a group of injectors 4. However, it is also possible to provide one pressure-valve 31 for each injector 4.

As it appears from the above example, the lubricant feed conduit 9 is communicating with the return line 13. In the illustration of FIG. 3a, the return conduit 13 is entering the controller 11, and the feed conduit 9" is exiting the controller 11. This is also illustrated in FIG. 1 by the solid line 9" which in extension is connected to the feed conduit 9. In case of the controller 11 being an add-on unit, the controller 11 would have at least 4 conduit connectors.

However, this need not be so. Optionally, the controller 11 comprises a return exit line 34 which is connected to the return conduit 13, as illustrated in FIG.3b. In the latter case, the return conduit 13 is directly communicating with the feed conduit 9' and 9. This embodiment is illustrated in FIG. 1 by the dotted alternative line 9', which in extension is connected to the feed conduit 9. In this case, the return conduit 13 in extension of the feed conduit 9 and 9' provides lubricant directly to the lubricant inlet port 4A of the injectors 4 for injection into the cylinder, and the controller 11 is bypassed.

FIG. 4 illustrates a second, alternative embodiment of an outlet-valve system 15. The generalised principle of the outlet-valve system 15 is similar to the one disclosed in WO2014/048438. This reference also provides additional technical details as well as explanations to the functioning of the injector presented here, which are not repeated here, for convenience. A nozzle aperture 5' is provided in the nozzle 5 tip for ejection of lubrication oil. Inside a cavity 40 of the nozzle 5, an outlet-valve member 18 is provided, the outlet-valve member 18 comprising a stem 41 and a cylindrical sealing head 42 which is arranged slidingly in a cylindrical cavity part 43 at the nozzle tip 44. The position of the valve member 18 is pre-stressed backwards away from the nozzle tip 44 by a spring 45 and is offset forwards by oil pressure acting through a channel 46 upon the back part 47 of the stem 41, the oil pressure acting against the spring force. The nozzle aperture 5' is sealingly covered by the sealing head 42 which abuts the cylindrical cavity part 43 at the nozzle tip 44, unless the valve member 18 is pushed forward such that the sealing head 43 slides pass and away from the nozzle aperture 5' to allow lubricant oil to flow from the inner cavity 46 through the nozzle aperture 5' for ejection.

The following values are non-limiting illustrative examples of possible working pressures. The pressure in the return conduit 13 and the feed conduit 9 is 10 bar. The pressure in the supply conduit 12 is 40 bars. The outlet-valve 15 opens at 37 bar, such that the lubricant is injected at 37 bars. The springs 28A and 29B are configured for pressing the plunger-member 29 and the actuator-member 28 fully back to the rearmost position if the pressure at the pressure-control port 4B in the idle state between injection phases is 10 bar. The pressure-valve is adjustable to a pressure of between 10 and 30 bars, for example 20 bar, well below the 37 bar injection pressure but high enough to provide high enough pressure in the pressure chamber 27 for the actuator-member 28 not returning fully to the most rearward position but keeping a distance from the most rearward. By adjusting this distance through adjustment of the pressure in the range of 10-30 bar, the injection volume in the front chamber 16D is adjusted, because the forward motion in the injection phase is smaller the more the plunger-member 29 is offset from the most rearward position at the start of the injection phase.

Optionally the injection volume is controlled by a flow meter inserted in the feed line 9, either for the group of injectors or for each single injector 4. The flow meter measures flow (mass and/or volume) and is then used for control that the injector(s) is/are properly working.

The injection system with the injector 4 as described above and the controller 11 are simple to install and replace. It is a relatively low-cost technical solution, albeit robust and stable. Especially, the injection volume is precisely adjustable. Also, the system does not comprise electrical wires to and from the injector 4, which makes it robust against heat, whereas electrical wires are likely to have an insulation layer that melts in heat.

### Reference numbers

1 cylinder
2 cylinder liner
3 cylinder wall
4 oil injector
4' injector housing
4A inlet port of oil injector 4
4B pressure-control port of oil injector 4
5 nozzle
5' nozzle aperture
6 free cut in liner
7 atomised spray from a single injector 4
8 swirling spray
9 lubricant feed conduit
10 pressure-control conduit
11 controller
12 supply conduit
13 return conduit
14 swirl in cylinder
15 outlet-valve system of injector 4
16 flow chamber connecting inlet-valve system 13 with outlet-valve system 15
16' to hollow part of flow chamber 16
16A rear chamber
16B first intermediate chamber
16C second intermediate chamber
16D front chamber
17 non-return outlet-valve, exemplified as outlet ball valve
18 outlet-valve member, exemplified as ball
19 outlet-valve seat
20 outlet-valve spring
21 injector base
22 O-ring at end of flow chamber 16
23A rear channel in actuator-member 28 connecting rear chamber 16A with first intermediate chamber 16B
23B intermediate channel between first and second intermediate chamber 16A, 16B
23C front channel in plunger-member 29 between second intermediate chamber 16B and front chamber 16D
24 channel inlet into front channel 23C
25 lubricant supply
26 non-return plunger-valve
26A plunger-valve ball
26B plunger-valve seat, against which the plunger-valve ball 26A is pre-stressed
26C plunger-valve spring pre-stressing plunger-valve ball 26A against plunger-valve seat 26B
27 pressure chamber at rear part 28B
28 actuator-member for pushing head 29' of plunger-member 29
28A actuator-spring acting rearwards on actuator-member 28
28B rear part of actuator-member 28
29 plunger-member
29A head of plunger-member 29
29B plunger spring in second intermediate chamber 16C
30 toggle-valve
30A toggle-valve inlet port
30B toggle-valve outlet port
30C toggle-valve return port
31 pres sure-valve
31A pressure-valve inlet port
31B pressure-valve return port
31C pressure regulator, ex. spring-loaded pressure adjustment member injection-phase
31D pre-tensioner in pressure-valve 31
32 toggle-member
32A first toggle closure element of toggle-member 32
32B second toggle closure element of toggle-member 32
33 arrow illustrating reciprocal movement of toggle member 32
34 return exit line from controller 11 to return conduit 13

## Claims

1. A large slow-running two-stroke engine comprising a cylinder (1) with a reciprocal piston inside and with a plurality of lubricant injectors (4) distributed along a perimeter of the cylinder (1) for injection of lubricant into the cylinder (1) at various positions on the perimeter during injection phases; the engine further comprising a lubricant feed conduit (9) containing lubricant at a first pressure and a pressure-control conduit (10) containing pressure-liquid at a pressure higher than the first pressure;
wherein each lubricant injector (4) comprises
- a lubricant inlet port (4A) flow-connected to the lubricant feed conduit (9) for receiving lubricant from it;
- a nozzle (5) with a nozzle aperture (5') extending into the cylinder (1) configured for injecting lubricant from the inlet port (4A) into the cylinder (1) in the injection phase;
- an outlet-valve system (15) at the nozzle (5) for opening and closing for flow of lubricant to the nozzle aperture (5') during an injection-cycle;
- a front chamber (16D) inside the injector (4) between the lubricant inlet port (4A) and the outlet-valve system (15) for receiving and accumulating a predetermined volume of lubricant from the inlet port (4A) prior to an injection phase;
- wherein the outlet-valve system (15) is configured for opening for flow of lubricant from the front chamber (16D) through the outlet-valve system (15) and to the nozzle aperture (5') during an injection phase upon pressure rise above a predetermined pressure limit in the front chamber (16D) and at the outlet-valve system (15) and configured for closing the outlet-valve system (15) after the injection phase;
- a pressure-control port (4B) flow-connected to the pressure-control conduit (10) for receiving pressure-liquid therefrom in the injection phase;
- a pressure chamber (27) in communication with the pressure-control port (4B) for periodically receiving the pressure-liquid from the pressure-control port (4B) in the injection phase and for drain thereof after the injection phase;
- a reciprocal hydraulic-driven actuator-plunger (28, 29) in contact with the pressure chamber (27) and pre-stressed by a spring-load from an actuator-plunger spring (28A, 29B) and being configured for motion that is driven by the pressure-liquid in the pressure chamber (27) in the injection phase and configured for causing the pressure rise in the lubricant in the front chamber (16D) above the predetermined pressure limit by its motion in the injection phase;
wherein the engine further comprises a stroke length adjustment mechanism for variably adjusting the stroke length of the reciprocal hydraulic-driven actuator-plunger (28, 29);
**characterised in that** the stroke length adjustment mechanism is configured for variable adjustment of the amount of pressure-liquid that is drained from the pressure chamber (27) between injection phases.

2. An engine according to claim 1, wherein the stroke length adjustment mechanism comprises a pressure regulator (31C) for variably regulating an idle-pressure in the pressure chamber (27) between the injection phases, wherein the idle-pressure is lower than the predetermined pressure limit, for only partly counteracting the spring-load from the actuator-plunger spring (28A, 29B) on the actuator-plunger (28, 29) and for variably adjusting a retracted position for the actuator-plunger (28, 29) for thereby regulating the stroke length of the actuator-plunger (28, 29) and the size of the predetermined lubricant volume for injection in the injection phase.

3. An engine according to claim 2, wherein the engine comprises a return conduit (13) configured for draining the pressure-liquid from the pressure-control port (4B) through the pressure-control conduit (10) between injection phases, wherein the pressure regulator (31C) is part of an adjustable pressure valve (31) arranged for liquid-flow connecting the pressure-control conduit (10) with the return conduit (13), and configured for adjusting the idle-pressure in the pressure-control conduit (10) and the pressure-control port (4B) and the pressure chamber (27).

4. An engine according to claim 3, wherein engine comprises a supply conduit (12) for supplying the pressure-liquid for the pressure-control conduit (10); wherein the stroke length adjustment mechanism further comprises a toggle-valve (30), the toggle-valve (30) comprising a toggle-valve inlet port (30A) connected to a supply conduit (12), a toggle-valve outlet port (30B) connected to the pressure-control conduit (10), a toggle-valve return port (30C) connected to the return conduit (13) through the adjustable pressure valve (31), and a toggle member (32) arranged for toggling between a first state, where the toggle-valve inlet port (30A) and the toggle-valve outlet port (30B) are communicating for flow of pressure-liquid from the supply conduit (12) through the toggle-valve (30) and through the pressure-control conduit (10) to the pressure-control port (4B), and a second state, where the toggle-valve outlet port (30B) and the toggle-valve return port (30C) are communicating for drain of pressure-liquid from the pressure-control conduit (10) through the toggle-valve (30) to the toggle-valve return port (30C), through the adjustable pressure valve (31) and to the return conduit (13).

5. An engine according to claim 4, wherein the toggle-valve return port (30C) is connected to the return conduit (13) through the adjustable pressure valve (31).

6. An engine according to claim 5, wherein the adjustable pressure valve (31) is step-less adjustable.

7. An engine according to any preceding claim, wherein the engine comprises a controller (11) for controlling the amount and timing of the lubricant injection by at least one of the injectors (4), and wherein the controller (11) is provided remotely from the injector (4) and comprises the stroke length adjustment mechanism.

8. An engine according to any preceding claim, wherein the spring-load is in a direction away from the nozzle (5), and the actuator-plunger (28, 29) is configured for being pushed towards the nozzle (5) in the injection phase; wherein the injector (4) comprises a rigid lubricant conduit (16') communicating with the lubricant inlet port (4A) and with the nozzle (5) for flow of lubricant from the inlet port (4A) to the nozzle (5); wherein the lubricant conduit (16') comprises the front chamber (16D) at the nozzle (5) and a rear chamber (16A) remote from the nozzle (5), the rear chamber (16A) communicating with the inlet port (4A), the front chamber (16D) containing the predetermined lubricant volume and having a variable size determined by the position of the actuator-plunger (28, 29); wherein the injector (4) comprises a valve (26) between the front chamber (16D) and the rear chamber (16A), the valve (26) being configured for flow-connecting the front chamber (16D) with the rear chamber (16A) between injection phases for flow of lubricant from the rear chamber (16A) to the front chamber (16D); and the valve (26) being configured for disconnecting the front chamber (16D) from the rear chamber (16A) in the injection phase for preventing back-flow of lubricant from the front chamber (16D) when lubricant is pressurised in the front chamber (16D) and expelled from the front chamber (16D) through the nozzle aperture (5') by the motion of the actuator-plunger (28, 29).

9. A method for lubricating a large slow-running two-stroke engine comprising a cylinder (1) with a reciprocal piston inside and with a plurality of lubricant injectors (4) distributed along a perimeter of the cylinder (1) for injection of lubricant into the cylinder (1) at various positions on the perimeter during injection phases; the engine further comprising a lubricant feed conduit (9) containing lubricant at a first pressure and a pressure-control conduit (10) containing pressure-liquid at a pressure higher than the first pressure;
wherein each lubricant injector (4) comprises
- a lubricant inlet port (4A) flow-connected to the lubricant feed conduit (9) for receiving lubricant from it;
- a nozzle (5) with a nozzle aperture (5') extending into the cylinder (1) configured for injecting lubricant from the inlet port (4A) into the cylinder (1) in the injection phase;
- an outlet-valve system (15) at the nozzle (5) for opening and closing for flow of lubricant to the nozzle aperture (5') during an injection-cycle;
- a front chamber (16D) inside the injector (4) between the lubricant inlet port (4A) and the outlet-valve system (15) for receiving and accumulating a pre-determined volume of lubricant from the inlet port (4A) prior to an injection phase;
- wherein the outlet-valve system (15) is configured for opening for flow of lubricant from the front chamber (16D) through the outlet-valve system (15) and to the nozzle aperture (5') during an injection phase upon pressure rise above a predetermined limit in the front chamber (16D) and at the outlet-valve system (15) and configured for closing the outlet-valve system (15) after the injection phase;
- a pressure-control port (4B) flow-connected to the pressure-control conduit (10) for receiving pressure-liquid therefrom in the injection phase;
- a pressure chamber (27) in communication with the pressure-control port (4B) for periodically receiving the pressure-liquid from the pressure-control port (4B) in the injection phase;
- a reciprocal hydraulic-driven actuator-plunger (28, 29) in contact with the pressure chamber (27) and pre-stressed by a spring-load from an actuator-plunger spring (28A, 29B) and being configured for motion that is driven by the pressure-liquid in the pressure chamber (27) in the injection phase and configured for causing the pressure rise in the lubricant in the front chamber (16D) above the predetermined limit by its motion in the injection phase;
wherein the engine further comprises a stroke length adjustment mechanism for variably adjusting the stroke length of the of the reciprocal hydraulic-driven actuator-plunger (28, 29);
wherein the method comprises in cyclic operation
- in the injection phase, providing pressure-liquid at the pressure-control port (4B) and in the pressure chamber (27) exerting force on the actuator-plunger (28, 29) by the pressure-liquid and by the force driving the actuator-plunger (28, 29) into motion, by the motion causing pressure rise in the predetermined lubricant volume (16D) inside the injector (4) and upon pressure rise above the predetermined limit, pumping this predetermined lubricant volume through the outlet-valve system (15) and the nozzle aperture (5') into the cylinder (1);
- after the injection phase, retracting the actuator-plunger (28, 29) by draining pressure-liquid from the pressure chamber (27);
- during retraction re-filling the front chamber (16B) with lubricant for a subsequent injection phase;
**characterised in that** the stroke length adjustment mechanism is configured for variable adjustment of the amount of pressure-liquid that is drained from the pressure chamber (27) between injection phases and wherein the method comprises adjusting the stroke length between injection cycles by adjusting the amount of pressure-liquid that is drained from the pressure chamber (27) after the injection phase.

10. A method according to claim 9, wherein the stroke length adjustment mechanism comprises a pressure regulator (31C) for variably regulating an idle-pressure in the pressure chamber (27) between the injection phases, wherein the idle-pressure is lower than the predetermined pressure limit, for only partly counteracting the spring-load from the actuator-plunger spring (28A, 29B) on the actuator-plunger (28, 29) and for variably adjusting a retracted position for the actuator-plunger (28, 29) for thereby regulating the stroke length of the actuator-plunger (28, 29) and the size of the predetermined lubricant volume for injection in the injection phase; wherein the method comprises, during multiple cycles of operation, adjusting the stroke length by adjusting the idle-pressure by the pressure regulator (31C).

11. A method according to claim 10, wherein the engine comprises a return conduit (13) for draining the pressure-liquid from the pressure-control port (4B) and the pressure-control conduit (10) between injection phases, wherein the pressure regulator (31C) is part of an adjustable pressure valve (31) and wherein the method comprises liquid-flow connecting the pressure-control conduit (10) with the return conduit (13) through the adjustable pressure valve (31) and adjusting the idle-pressure in the pressure-control conduit (10) and the pressure-control port (4B) and the pressure chamber (27) by adjusting the pressure between the pressure-control conduit (10) and the return conduit (13) by the pressure regulator (31C) in the adjustable pressure valve (31).

12. A method according to claim 11, wherein engine comprises a supply conduit (12) for supplying the pressure-liquid for the pressure-control conduit (10); wherein the stroke length adjustment mechanism further comprises a toggle-valve (30), the toggle-valve (30) comprising a toggle-valve inlet port (30A) connected to a supply conduit (12), a toggle-valve outlet port (30B) connected to the pressure-control conduit (10), a toggle-valve return port (30C) connected to the return conduit (13) through the adjustable pressure valve (31), and a toggle member (32) arranged for toggling between a first state, where the toggle-valve inlet port (30A) and the toggle-valve outlet port (30B) are communicating for flow of pressure-liquid from the supply conduit (12) through the toggle-valve (30) and through the pressure-control conduit (10) to the pressure-control port (4B), and a second state, where the toggle-valve outlet port (30B) and the toggle-valve return port (30C) are communicating for drain of pressure-liquid from the pressure-control conduit (10) through the toggle-valve (30) to the toggle-valve return port (30C), through the adjustable pressure valve (31) and to the return conduit (13); wherein the method comprises in the cyclic operation toggling the valve between the first state in the injection phase and the second state in the idle phase between injection phases.

13. A controller (11) which may be electronically connected to a computer or comprises a computer able to execute the steps of method claims 9-12 for a large slow-running two-stroke engine of the type comprising a cylinder (1) with a reciprocal piston inside and with a plurality of lubricant injectors (4) distributed along a perimeter of the cylinder (1), wherein the injectors (4) comprise a hydraulic-driven pumping system for injection of lubricant into the cylinder (1) at various positions on the perimeter during injection phases;
wherein the controller (11) is configured for feeding pressure liquid to the injector (4) for hydraulically driving the pumping system in the lubricant injector (4), wherein the controller (11) comprises a stroke length adjustment mechanism for adjusting a stroke length of an actuator-plunger (28, 29) in the hydraulic-driven pumping system in the lubricant injector (4);
wherein the stroke length adjustment mechanism in the controller (11) is configured for variable adjustment of the amount of pressure-liquid that is drained from the hydraulic-driven pumping system of the injector (4) between injection phases.

14. A controller according to claim 13 wherein the stroke length adjustment mechanism comprises an adjustable pressure valve (31) and a toggle-valve (30);
wherein the adjustable pressure valve (31) comprises a pressure-valve inlet port (31A) and a pressure-valve outlet port (31B) and a pressure regulator (31C) fluid-flow arranged therein between for adjusting a pressure drop between the pressure-valve inlet port (31A) and the pressure-valve outlet port (31B);
wherein the toggle-valve (30) comprises
- a toggle-valve inlet port (30A) for connection to a lubricant supply conduit (12) of the engine,
- a toggle-valve outlet port (30B) for connection to a pressure port (4B) of the lubricant injector (4) through a control conduit (10) of the engine,
- a toggle-valve return port (30C) connected to the pressure-valve inlet port (31A) for connection to a lubricant return conduit (13) of the engine through the adjustable pressure valve (31), and
- a toggle member (32) arranged for toggling between a first state, where the toggle-valve inlet port (30A) and the toggle-valve outlet port (30B) are communicating for flow of pressure-liquid from the supply conduit (12) through the toggle-valve (30) and through the pressure-control conduit (10) to a pressure-control port (4B) of the injector (4), and a second state, where the toggle-valve outlet port (30B) and the toggle-valve return port (30C) are communicating for drain of pressure-liquid from the pressure-control conduit (10) to the return conduit (13) by flow through the toggle-valve outlet port (30B), the toggle-valve (30), the toggle-valve return port (30C), the pressure-valve inlet port (31A), the pressure regulator (31C) in the adjustable pressure valve (31), and the pressure-valve outlet port (31B).

## Patentansprüche

1. Großer, langsam laufender Zweitaktmotor, umfassend einen Zylinder (1) mit einem hin- und hergehenden Kolben im Inneren und mit einer Vielzahl von Schmiermitteleinspritzdüsen (4), die zur Einspritzung von Schmiermittel in den Zylinder (1) an verschiedenen Positionen des Umfangs während Einspritzphasen entlang eines Umfangs des Zylinders (1) verteilt ist; der Motor ferner umfassend eine Schmiermittelzufuhrleitung (9), die Schmiermittel bei einem ersten Druck enthält, und eine Drucksteuerleitung (10), die Druckflüssigkeit bei einem Druck enthält, der höher als der erste Druck ist;
wobei jede Schmiermitteleinspritzdüse (4) Folgendes umfasst:
eine Schmiermitteleinlassöffnung (4A), die mit der Schmiermittelzufuhrleitung (9) strömungsverbunden ist, um Schmiermittel von dieser aufzunehmen;
eine Düse (5) mit einer sich in den Zylinder (1) erstreckenden Düsenöffnung (5'), die dazu konfiguriert ist, in der Einspritzphase Schmiermittel von der Einlassöffnung (4A) in den Zylinder (1) einzuspritzen;
ein Auslassventilsystem (15) an der Düse (5) zum Öffnen und Schließen für eine Strömung von Schmiermittel zu der Düsenöffnung (5') während eines Einspritzzyklus;
eine vordere Kammer (16D) innerhalb der Einspritzdüse (4) zwischen der Schmiermitteleinlassöffnung (4A) und dem Auslassventilsystem (15) zum Aufnehmen und Ansammeln eines vorbestimmten Volumens von Schmiermittel von der Einlassöffnung (4A) vor einer Einspritzphase;
wobei das Auslassventilsystem (15) zum Öffnen für eine Strömung von Schmiermittel von der vorderen Kammer (16D) durch das Auslassventilsystem (15) und zu der Düsenöffnung (5') während einer Einspritzphase bei Druckanstieg über eine vorgegebene Druckgrenze in der vorderen Kammer (16D) und am Auslassventilsystem (15) konfiguriert ist und zum Schließen des Auslassventilsystems (15) nach der Einspritzphase konfiguriert ist;
eine Drucksteueröffnung (4B), die mit der Drucksteuerleitung (10) strömungsverbunden ist, um in der Einspritzphase Druckflüssigkeit daraus aufzunehmen;
eine Druckkammer (27) in Verbindung mit der Drucksteueröffnung (4B) zum periodischen Aufnehmen der Druckflüssigkeit von der Drucksteueröffnung (4B) in der Einspritzphase und zum Ablassen derselben nach der Einspritzphase;
einen hin- und hergehenden, hydraulisch angetriebenen Betätigungskolben (28, 29), der mit der Druckkammer (27) in Kontakt steht und durch eine Federkraft von einer Betätigungskolbenfeder (28A, 29B) vorgespannt ist und für eine Bewegung konfiguriert ist, die durch die Druckflüssigkeit in der Druckkammer (27) in der Einspritzphase angetrieben wird, und
dazu konfiguriert ist, den Druckanstieg in dem Schmiermittel in der vorderen Kammer (16D) über die vorbestimmte Druckgrenze durch seine Bewegung in der Einspritzphase zu bewirken;
wobei der Motor ferner einen Hublängeneinstellmechanismus zum variablen Einstellen der Hublänge des hin- und hergehenden, hydraulisch angetriebenen Betätigungskolbens (28, 29) umfasst;
**dadurch gekennzeichnet, dass** der Hublängeneinstellmechanismus zur variablen Einstellung der Menge an Druckflüssigkeit konfiguriert ist, die zwischen den Einspritzphasen aus der Druckkammer (27) abgelassen wird.

2. Motor nach Anspruch 1, wobei der Hublängeneinstellmechanismus einen Druckregler (31C) zum variablen Regulieren eines Leerlaufdrucks in der Druckkammer (27) zwischen den Einspritzphasen umfasst, wobei der Leerlaufdruck niedriger als die vorgegebene Druckgrenze ist, um der Federkraft von der Betätigungskolbenfeder (28A, 29B) auf den Betätigungskolben (28, 29) nur teilweise entgegenzuwirken und eine zurückgezogene Position für den Betätigungskolben (28, 29) variabel einzustellen, um dadurch die Hublänge des Betätigungskolbens (28, 29) und die Größe des vorbestimmten Schmiermittelvolumens zur Einspritzung in der Einspritzphase zu regulieren.

3. Motor nach Anspruch 2, wobei der Motor eine Rückführleitung (13) umfasst, die zum Ablassen der Druckflüssigkeit von der Drucksteueröffnung (4B) durch die Drucksteuerleitung (10) zwischen Einspritzphasen konfiguriert ist, wobei der Druckregler (31C) Teil eines einstellbaren Druckventils (31) ist, das für ein Verbinden der Drucksteuerleitung (10) mit der Rückführleitung (13) für eine Flüssigkeitsströmung angeordnet ist, und die zum Einstellen des Leerlaufdrucks in der Drucksteuerleitung (10) und der Drucksteueröffnung (4B) und der Druckkammer (27) konfiguriert ist.

4. Motor nach Anspruch 3, wobei der Motor eine Zufuhrleitung (12) zum Zuführen der Druckflüssigkeit für die Drucksteuerleitung (10) umfasst; wobei der Hublängeneinstellmechanismus ferner ein Umschaltventil (30) umfasst, das Umschaltventil (30) umfassend eine Umschaltventil-Einlassöffnung (30A), die mit einer Zufuhrleitung (12) verbunden ist, eine Umschaltventil-Auslassöffnung (30B), die mit der Drucksteuerleitung (10) verbunden ist, eine Umschaltventil-Rückführöffnung (30C), die mit der Rückführleitung (13) durch das einstellbare Druckventil (31) verbunden ist, und ein Umschaltelement (32), das zum Umschalten zwischen einem ersten Zustand, in dem die Umschaltventil-Einlassöffnung (30A) und die Umschaltventil-Auslassöffnung (30B) für eine Strömung von Druckflüssigkeit von der Zufuhrleitung (12) durch das Umschaltventil(30) und durch die Drucksteuerleitung (10) zu der Drucksteueröffnung (4B) in Verbindung stehen, und einem zweiten Zustand, in dem die Umschaltventil-Auslassöffnung (30B) und die Umschaltventil-Rückführöffnung (30C) zum Ablassen von Druckflüssigkeit von der Drucksteuerleitung (10) durch das Umschaltventil (30) zu der Umschaltventil-Rückführöffnung (30C), durch das einstellbare Druckventil (31) und zu der Rückführleitung (13) in Verbindung stehen, angeordnet ist.

5. Motor nach Anspruch 4, bei dem die Umschaltventil-Rückführöffnung (30C) mit der Rückführleitung (13) durch das einstellbare Druckventil (31) verbunden ist.

6. Motor nach Anspruch 5, wobei das einstellbare Druckventil (31) stufenlos einstellbar ist.

7. Motor nach einem der vorhergehenden Ansprüche, wobei der Motor eine Steuerung (11) zum Steuern der Menge und des Zeitpunkts der Schmiermitteleinspritzung durch mindestens eine der Einspritzdüsen (4) umfasst, und wobei die Steuerung (11) entfernt von der Einspritzdüse (4) bereitgestellt ist und den Hublängeneinstellmechanismus umfasst.

8. Motor nach einem der vorhergehenden Ansprüche, wobei die Federkraft in einer Richtung weg von der Düse (5) wirkt und der Betätigungskolben (28, 29) dazu konfiguriert ist, in der Einspritzphase in Richtung der Düse (5) gedrückt zu werden; wobei die Einspritzdüse (4) eine starre Schmiermittelleitung (16') umfasst, die mit der Schmiermitteleinlassöffnung (4A) und mit der Düse (5) für eine Strömung von Schmiermittel von der Einlassöffnung (4A) zu der Düse (5) in Verbindung steht; wobei die Schmiermittelleitung (16') die vordere Kammer (16D) an der Düse (5) und eine hintere Kammer (16A) entfernt von der Düse (5) umfasst, wobei die hintere Kammer (16A) mit der Einlassöffnung (4A) in Verbindung steht, die vordere Kammer (16D) das vorbestimmte Schmiermittelvolumen enthält und eine variable Größe aufweist, die durch die Position des Betätigungskolbens (28, 29) bestimmt wird; wobei die Einspritzdüse (4) ein Ventil (26) zwischen der vorderen Kammer (16D) und der hinteren Kammer (16A) umfasst, wobei das Ventil (26) dazu konfiguriert ist, die vordere Kammer (16D) mit der hinteren Kammer (16A) zwischen den Einspritzphasen für eine Strömung von Schmiermittel von der hinteren Kammer (16A) zur vorderen Kammer (16D) strömungszuverbinden; und wobei das Ventil (26) dazu konfiguriert ist, die vordere Kammer (16D) von der hinteren Kammer (16A) in der Einspritzphase zu trennen, um eine Rückströmung von Schmiermittel aus der vorderen Kammer (16D) zu verhindern, wenn Schmiermittel in der vorderen Kammer (16D) druckbeaufschlagt wird und durch die Bewegung des Betätigungskolbens (28, 29) aus der vorderen Kammer (16D) durch die Düsenöffnung (5') ausgestoßen wird.

9. Verfahren zum Schmieren eines großen, langsam laufenden Zweitaktmotors, umfassend einen Zylinder (1) mit einem hin- und hergehenden Kolben im Inneren und mit einer Vielzahl von Schmiermitteleinspritzdüsen (4), die zur Einspritzung von Schmiermittel in den Zylinder (1) an verschiedenen Positionen des Umfangs während Einspritzphasen entlang eines Umfangs des Zylinders (1) verteilt ist; der Motor ferner umfassend eine Schmiermittelzufuhrleitung (9), die Schmiermittel bei einem ersten Druck enthält, und eine Drucksteuerleitung (10), die Druckflüssigkeit bei einem Druck enthält, der höher als der erste Druck ist;
wobei jede Schmiermitteleinspritzdüse (4) Folgendes umfasst:
eine Schmiermitteleinlassöffnung (4A), die mit der Schmiermittelzufuhrleitung (9) strömungsverbunden ist, um Schmiermittel von dieser aufzunehmen;
eine Düse (5) mit einer sich in den Zylinder (1) erstreckenden Düsenöffnung (5'), die dazu konfiguriert ist, in der Einspritzphase Schmiermittel von der Einlassöffnung (4A) in den Zylinder (1) einzuspritzen;
ein Auslassventilsystem (15) an der Düse (5) zum Öffnen und Schließen für eine Strömung von Schmiermittel zu der Düsenöffnung (5') während eines Einspritzzyklus;
eine vordere Kammer (16D) innerhalb der Einspritzdüse (4) zwischen der Schmiermitteleinlassöffnung (4A) und dem Auslassventilsystem (15) zum Aufnehmen und Ansammeln eines vorbestimmten Volumens von Schmiermittel von der Einlassöffnung (4A) vor einer Einspritzphase;
wobei das Auslassventilsystem (15) zum Öffnen für eine Strömung von Schmiermittel von der vorderen Kammer (16D) durch das Auslassventilsystem (15) und zu der Düsenöffnung (5') während einer Einspritzphase bei Druckanstieg über eine vorgegebene Grenze in der vorderen Kammer (16D) und am Auslassventilsystem (15) konfiguriert ist und zum Schließen des Auslassventilsystems (15) nach der Einspritzphase konfiguriert ist;
eine Drucksteueröffnung (4B), die mit der Drucksteuerleitung (10) strömungsverbunden ist, um in der Einspritzphase Druckflüssigkeit daraus aufzunehmen;
eine Druckkammer (27) in Verbindung mit der Drucksteueröffnung (4B) zum periodischen Aufnehmen der Druckflüssigkeit von der Drucksteueröffnung (4B) in der Einspritzphase;
einen hin- und hergehenden, hydraulisch angetriebenen Betätigungskolben (28, 29), der mit der Druckkammer (27) in Kontakt steht und durch eine Federkraft von einer Betätigungskolbenfeder (28A, 29B) vorgespannt ist und für eine Bewegung konfiguriert ist, die durch die Druckflüssigkeit in der Druckkammer (27) in der Einspritzphase angetrieben wird, und dazu konfiguriert ist, den Druckanstieg in dem Schmiermittel in der vorderen Kammer (16D) über die vorbestimmte Grenze durch seine Bewegung in der Einspritzphase zu bewirken;
wobei der Motor ferner einen Hublängeneinstellmechanismus zum variablen Einstellen der Hublänge des hin- und hergehenden, hydraulisch angetriebenen Betätigungskolbens (28, 29) umfasst;
wobei das Verfahren im zyklischen Betrieb Folgendes umfasst:
in der Einspritzphase, Bereitstellen von Druckflüssigkeit an der Drucksteueröffnung (4B) und, in der Druckkammer (27), Ausüben einer Kraft auf den Betätigungskolben (28, 29) durch die Druckflüssigkeit und, durch die Kraft, Inbewegungsetzen des Betätigungskolbens (28, 29) und, durch die Bewegung, Verursachen eines Druckanstiegs in dem vorbestimmten Schmiermittelvolumen (16D) innerhalb der Einspritzdüse (4) und, bei Druckanstieg über die vorbestimmte Grenze, Pumpen dieses vorbestimmten Schmiermittelvolumens durch das Auslassventilsystem (15) und die Düsenöffnung (5') in den Zylinder (1);
nach der Einspritzphase, Zurückziehen des Betätigungskolbens (28, 29) durch Ablassen von Druckflüssigkeit aus der Druckkammer (27) ;
während des Zurückziehens, Wiederbefüllen der vorderen Kammer (16B) mit Schmiermittel für eine nachfolgende Einspritzphase;
**dadurch gekennzeichnet, dass** der Hublängeneinstellmechanismus zur variablen Einstellung der Menge an Druckflüssigkeit konfiguriert ist, die zwischen Einspritzphasen aus der Druckkammer (27) abgelassen wird, und wobei das Verfahren Einstellen der Hublänge zwischen Einspritzzyklen durch Einstellen der Menge an Druckflüssigkeit, die nach der Einspritzphase aus dem Druckraum (27) abgelassen wird, umfasst.

10. Verfahren nach Anspruch 9, wobei der Hublängeneinstellmechanismus einen Druckregler (31C) zum variablen Regulieren eines Leerlaufdrucks in der Druckkammer (27) zwischen den Einspritzphasen umfasst, wobei der Leerlaufdruck niedriger als die vorgegebene Druckgrenze ist, um der Federkraft von der Betätigungskolbenfeder (28A, 29B) auf den Betätigungskolben (28, 29) nur teilweise entgegenzuwirken und eine zurückgezogene Position für den Betätigungskolben (28, 29) variabel einzustellen, um dadurch die Hublänge des Betätigungskolbens (28, 29) und die Größe des vorbestimmten Schmiermittelvolumens zur Einspritzung in der Einspritzphase zu regulieren; wobei das Verfahren während mehrerer Betriebszyklen Einstellen der Hublänge durch Einstellen des Leerlaufdrucks durch den Druckregler (31C) umfasst.

11. Verfahren nach Anspruch 10, wobei der Motor eine Rückführleitung (13) zum Ablassen der Druckflüssigkeit von der Drucksteueröffnung (4B) und der Drucksteuerleitung (10) zwischen Einspritzphasen umfasst, wobei der Druckregler (31C) Teil eines einstellbaren Druckventils (31) ist und wobei das Verfahren Verbinden der Drucksteuerleitung (10) mit der Rückführleitung (13) durch das einstellbare Druckventil (31) für eine Flüssigkeitsströmung und Einstellen des Leerlaufdrucks in der Drucksteuerleitung (10) und der Drucksteueröffnung (4B) und der Druckkammer (27) durch Einstellen des Drucks zwischen der Drucksteuerleitung (10) und der Rückführleitung (13) durch den Druckregler (31C) in dem einstellbaren Druckventil (31) umfasst.

12. Verfahren nach Anspruch 11, wobei der Motor eine Zufuhrleitung (12) zum Zuführen der Druckflüssigkeit für die Drucksteuerleitung (10) umfasst; wobei der Hublängeneinstellmechanismus ferner ein Umschaltventil (30) umfasst, das Umschaltventil (30) umfassend eine Umschaltventil-Einlassöffnung (30A), die mit einer Zufuhrleitung (12) verbunden ist, eine Umschaltventil-Auslassöffnung (30B), die mit der Drucksteuerleitung (10) verbunden ist, eine Umschaltventil-Rückführöffnung (30C), die mit der Rückführleitung (13) durch das einstellbare Druckventil (31) verbunden ist, und ein Umschaltelement (32), das zum Umschalten zwischen einem ersten Zustand, in dem die Umschaltventil-Einlassöffnung (30A) und die Umschaltventil-Auslassöffnung (30B) für eine Strömung von Druckflüssigkeit von der Zufuhrleitung (12) durch das Umschaltventil(30) und durch die Drucksteuerleitung (10) zu der Drucksteueröffnung (4B) in Verbindung stehen, und einem zweiten Zustand, in dem die Umschaltventil-Auslassöffnung (30B) und die Umschaltventil-Rückführöffnung (30C) zum Ablassen von Druckflüssigkeit von der Drucksteuerleitung (10) durch das Umschaltventil (30) zu der Umschaltventil-Rückführöffnung (30C), durch das einstellbare Druckventil (31) und zu der Rückführleitung (13) in Verbindung stehen, angeordnet ist; wobei das Verfahren in dem zyklischen Betrieb Umschalten des Ventils zwischen dem ersten Zustand in der Einspritzphase und dem zweiten Zustand in der Leerlaufphase zwischen Einspritzphasen umfasst.

13. Steuerung (11), die mit einem Computer elektronisch verbunden sein kann oder einen Computer umfasst, die dazu in der Lage ist, die Schritte der Verfahrensansprüche 9-12 für einen großen, langsam laufenden Zweitaktmotor auszuführen, der von dem Typ ist, der einen Zylinder (1) mit einem sich hin- und herbewegenden Kolben im Inneren und mit einer Vielzahl von Schmiermitteleinspritzvorrichtungen (4), die entlang eines Umfangs des Zylinders (1) verteilt sind, umfasst, wobei die Einspritzdüsen (4) ein hydraulisch angetriebenes Pumpsystem zum Einspritzen von Schmiermittel in den Zylinder (1) an verschiedenen Positionen des Umfangs während der Einspritzphasen umfassen;
wobei die Steuerung (11) zum Zuführen von Druckflüssigkeit zu der Einspritzdüse (4) konfiguriert ist, um das Pumpsystem in der Schmiermitteleinspritzdüse (4) hydraulisch anzutreiben, wobei die Steuerung (11) einen Hublängeneinstellmechanismus zum Einstellen einer Hublänge eines Betätigungskolbens (28, 29) in dem hydraulisch angetriebenen Pumpsystem in der Schmiermitteleinspritzdüse (4) umfasst;
wobei der Hublängeneinstellmechanismus in der Steuerung (11) zur variablen Einstellung der Menge an Druckflüssigkeit konfiguriert ist, die zwischen den Einspritzphasen aus dem hydraulisch angetriebenen Pumpsystem der Einspritzdüse (4) abgelassen wird.

14. Steuerung nach Anspruch 13, wobei der Hublängeneinstellmechanismus ein einstellbares Druckventil (31) und ein Umschaltventil (30) umfasst;
wobei das einstellbare Druckventil (31) eine Druckventil-Einlassöffnung (31A) und eine Druckventil-Auslassöffnung (31B) und einen dazwischen zur Fluidströmung angeordneten Druckregler (31C) zum Einstellen eines Druckabfalls zwischen der Druckventil-Einlassöffnung (31A) und der Druckventil-Auslassöffnung (31B) umfasst;
wobei das Umschaltventil (30) Folgendes umfasst:
eine Umschaltventil-Einlassöffnung (30A) zur Verbindung mit einer Schmiermittelzufuhrleitung (12) des Motors,
eine Umschaltventil-Auslassöffnung (30B) zur Verbindung mit einer Drucköffnung (4B) der Schmiermitteleinspritzdüse (4) durch eine Steuerleitung (10) des Motors,
eine mit der Druckventil-Einlassöffnung (31A) verbundene Umschaltventil-Rückführöffnung (30C) zur Verbindung mit einer Schmiermittelrückführleitung (13) des Motors durch das einstellbare Druckventil (31) und
ein Umschaltelement (32), das zum Umschalten zwischen einem ersten Zustand, in dem die Umschaltventil-Einlassöffnung (30A) und die Umschaltventil-Auslassöffnung (30B) für eine Strömung von Druckflüssigkeit von der Zufuhrleitung (12) durch das Umschaltventil(30) und durch die Drucksteuerleitung (10) zu einer Drucksteueröffnung (4B) der Einspritzdüse (4) in Verbindung stehen, und einem zweiten Zustand, in dem die Umschaltventil-Auslassöffnung (30B) und die Umschaltventil-Rückführöffnung (30C) zum Ablassen von Druckflüssigkeit von der Drucksteuerleitung (10) zu der Rückführleitung (13) durch Strömung durch die Umschaltventil-Auslassöffnung (30B), das Umschaltventil (30), die Umschaltventil-Rückführöffnung (30C), die Druckventil-Einlassöffnung (31A), den Druckregler (31C') in dem einstellbaren Druckventil (31) und die Druckventil-Auslassöffnung (31B) in Verbindung stehen, angeordnet ist.

## Revendications

1. Gros moteur lent à deux temps comprenant un cylindre (1) avec un piston alternatif à l'intérieur et avec une pluralité d'injecteurs de lubrifiant (4) répartis le long d'un périmètre du cylindre (1) pour l'injection de lubrifiant dans le cylindre (1) à diverses positions sur le périmètre pendant les phases d'injection ; le moteur comprenant en outre un conduit d'alimentation en lubrification (9) contenant du lubrifiant à une première pression et un conduit de commande de pression (10) contenant du liquide sous pression à une pression supérieure à la première pression ;
dans lequel chaque injecteur de lubrifiant (4) comprend
- un orifice d'entrée de lubrifiant (4A) en liaison fluidique avec le conduit d'alimentation en lubrifiant (9) pour recevoir du lubrifiant de celui-ci ;
- une buse (5) avec une ouverture de buse (5') s'étendant dans le cylindre (1) conçue pour injecter du lubrifiant de l'orifice d'entrée (4A) dans le cylindre (1) dans la phase d'injection ;
- un système de soupape de sortie (15) au niveau de la buse (5) pour s'ouvrir et se fermer pour l'écoulement de lubrifiant vers l'ouverture de buse (5') pendant un cycle d'injection ;
- une chambre avant (16D) à l'intérieur de l'injecteur (4) entre l'orifice d'entrée de lubrifiant (4A) et le système de soupape de sortie (15) pour recevoir et accumuler un volume prédéterminé de lubrifiant provenant de l'orifice d'entrée (4A) avant une phase d'injection ;
- dans lequel le système de soupape de sortie (15) est conçu pour s'ouvrir pour l'écoulement de lubrifiant de la chambre avant (16D) à travers le système de soupape de sortie (15) et vers l'ouverture de buse (5') pendant une phase d'injection lors d'une élévation de pression au-dessus d'une limite de pression prédéterminée dans la chambre avant (16D) et au niveau du système de soupape de sortie (15) et conçu pour fermer le système de soupape de sortie (15) après la phase d'injection ;
- un orifice de commande de pression (4B) en liaison fluidique avec le conduit de commande de pression (10) pour recevoir un liquide sous pression de celui-ci dans la phase d'injection ;
- une chambre de pression (27) en communication avec l'orifice de commande de pression (4B) pour recevoir périodiquement le liquide sous pression de l'orifice de commande de pression (4B) dans la phase d'injection et pour son évacuation après la phase d'injection ;
- un poussoir d'actionnement à entraînement hydraulique alternatif (28, 29) en contact avec la chambre de pression (27) et précontraint par une charge de ressort provenant d'un ressort de poussoir d'actionnement (28A, 29B) et étant conçu pour un mouvement qui est entraîné par le liquide sous pression dans la chambre de pression (27) dans la phase d'injection et conçu pour provoquer l'élévation de pression du lubrifiant dans la chambre avant (16D) au-dessus de la limite de pression prédéterminée par son mouvement dans la phase d'injection ;
dans lequel le moteur comprend en outre un mécanisme de réglage de longueur de course pour régler de manière variable la longueur de course du poussoir d'actionnement à entraînement hydraulique alternatif (28, 29) ;
**caractérisé en ce que** le mécanisme de réglage de longueur de course est conçu pour un réglage variable de la quantité de liquide sous pression qui est évacuée de la chambre de pression (27) entre des phases d'injection.

2. Moteur selon la revendication 1, dans lequel le mécanisme de réglage de longueur de course comprend un régulateur de pression (31C) pour réguler de manière variable une pression de ralenti dans la chambre de pression (27) entre les phases d'injection, dans lequel la pression de ralenti est inférieure à la limite de pression prédéterminée, pour ne contrebalancer que partiellement la charge de ressort du ressort de poussoir d'actionnement (28A, 29B) sur le poussoir d'actionnement (28, 29) et pour régler de manière variable une position rétractée pour le poussoir d'actionnement (28, 29) pour réguler ainsi la longueur de course du poussoir d'actionnement (28, 29) et la taille du volume de lubrifiant prédéterminé à injecter dans la phase d'injection.

3. Moteur selon la revendication 2, dans lequel le moteur comprend un conduit de retour (13) conçu pour évacuer le liquide sous pression de l'orifice de commande de pression (4B) à travers le conduit de commande de pression (10) entre des phases d'injection, dans lequel le régulateur de pression (31C) fait partie d'une soupape de pression réglable (31) agencée pour un écoulement de liquide reliant le conduit de commande de pression (10) au conduit de retour (13), et conçue pour régler la pression de ralenti dans le conduit de commande de pression (10) et l'orifice de commande de pression (4B) et la chambre de pression (27) .

4. Moteur selon la revendication 3, dans lequel le moteur comprend un conduit d'alimentation (12) pour fournir le liquide sous pression au conduit de commande de pression (10) ; dans lequel le mécanisme de réglage de longueur de course comprend en outre une soupape à bascule (30), la soupape à bascule (30) comprenant un orifice d'entrée de soupape à bascule (30A) relié à un conduit d'alimentation (12), un orifice de sortie de soupape à bascule (30B) relié au conduit de commande de pression (10), un orifice de retour de soupape à bascule (30C) relié au conduit de retour (13) par l'intermédiaire de la soupape de pression réglable (31), et un élément basculant (32) agencé pour basculer entre un premier état, dans lequel l'orifice d'entrée de soupape à bascule (30A) et l'orifice de sortie de soupape à bascule (30B) communiquent pour l'écoulement de liquide sous pression du conduit d'alimentation (12) à travers la soupape à bascule (30) et à travers le conduit de commande de pression (10) vers l'orifice de commande de pression (4B), et un second état, dans lequel l'orifice de sortie de soupape à bascule (30B) et l'orifice de retour de soupape à bascule (30C) communiquent pour l'évacuation de liquide sous pression du conduit de commande de pression (10) à travers la soupape à bascule (30) vers l'orifice de retour de soupape à bascule (30C), à travers la soupape de pression réglable (31) et vers le conduit de retour (13).

5. Moteur selon la revendication 4, dans lequel l'orifice de retour de soupape à bascule (30C) est relié au conduit de retour (13) par l'intermédiaire de la soupape à pression réglable (31).

6. Moteur selon la revendication 5, dans lequel la soupape de pression réglable (31) est réglable en continu.

7. Moteur selon une quelconque revendication précédente, dans lequel le moteur comprend un dispositif de commande (11) pour commander la quantité et le moment de l'injection de lubrifiant par au moins l'un des injecteurs (4), et dans lequel le dispositif de commande (11) est fourni à distance de l'injecteur (4) et comprend le mécanisme de réglage de longueur de course.

8. Moteur selon une quelconque revendication précédente, dans lequel la charge de ressort est dans une direction s'éloignant de la buse (5), et le poussoir d'actionnement (28, 29) est conçu pour être poussé vers la buse (5) dans le phase d'injection ; dans lequel l'injecteur (4) comprend un conduit de lubrifiant rigide (16') communiquant avec l'orifice d'entrée de lubrifiant (4A) et avec la buse (5) pour l'écoulement de lubrifiant de l'orifice d'entrée (4A) vers la buse (5) ; dans lequel le conduit de lubrifiant (16') comprend la chambre avant (16D) au niveau de la buse (5) et une chambre arrière (16A) éloignée de la buse (5), la chambre arrière (16A) communiquant avec l'orifice d'entrée (4A), la chambre avant (16D) contenant le volume de lubrifiant prédéterminé et ayant une taille variable déterminée par la position du poussoir d'actionnement (28, 29) ; dans lequel l'injecteur (4) comprend une soupape (26) entre la chambre avant (16D) et la chambre arrière (16A), la soupape (26) étant conçue pour relier fluidiquement la chambre avant (16D) à la chambre arrière (16A) entre des phases d'injection pour l'écoulement de lubrifiant de la chambre arrière (16A) vers la chambre avant (16D) ; et la soupape (26) étant conçue pour rompre la liaison entre la chambre avant (16D) et la chambre arrière (16A) dans la phase d'injection pour empêcher un flux de retour de lubrifiant de la chambre avant (16D) lorsque le lubrifiant est sous pression dans la chambre avant (16D) et expulsé de la chambre avant (16D) à travers l'ouverture de buse (5') par le mouvement du poussoir d'actionnement (28, 29).

9. Procédé de lubrification d'un gros moteur lent à deux temps comprenant un cylindre (1) avec un piston alternatif à l'intérieur et avec une pluralité d'injecteurs de lubrifiant (4) répartis le long d'un périmètre du cylindre (1) pour l'injection de lubrifiant dans le cylindre (1) à diverses positions sur le périmètre pendant les phases d'injection ; le moteur comprenant en outre un conduit d'alimentation en lubrification (9) contenant du lubrifiant à une première pression et un conduit de commande de pression (10) contenant du liquide sous pression à une pression supérieure à la première pression ;
dans lequel chaque injecteur de lubrifiant (4) comprend
- un orifice d'entrée de lubrifiant (4A) en liaison fluidique avec le conduit d'alimentation en lubrifiant (9) pour recevoir du lubrifiant de celui-ci ;
- une buse (5) avec une ouverture de buse (5') s'étendant dans le cylindre (1) conçue pour injecter du lubrifiant de l'orifice d'entrée (4A) dans le cylindre (1) dans la phase d'injection ;
- un système de soupape de sortie (15) au niveau de la buse (5) pour s'ouvrir et se fermer pour l'écoulement de lubrifiant vers l'ouverture de buse (5') pendant un cycle d'injection ;
- une chambre avant (16D) à l'intérieur de l'injecteur (4) entre l'orifice d'entrée de lubrifiant (4A) et le système de soupape de sortie (15) pour recevoir et accumuler un volume prédéterminé de lubrifiant provenant de l'orifice d'entrée (4A) avant une phase d'injection ;
- dans lequel le système de soupape de sortie (15) est conçu pour s'ouvrir pour l'écoulement de lubrifiant de la chambre avant (16D) à travers le système de soupape de sortie (15) et vers l'ouverture de buse (5') pendant une phase d'injection lors d'une élévation de pression au-dessus d'une limite prédéterminée dans la chambre avant (16D) et au niveau du système de soupape de sortie (15) et conçu pour fermer le système de soupape de sortie (15) après la phase d'injection ;
- un orifice de commande de pression (4B) en liaison fluidique avec le conduit de commande de pression (10) pour recevoir un liquide sous pression de celui-ci dans la phase d'injection ;
- une chambre de pression (27) en communication avec l'orifice de commande de pression (4B) pour recevoir périodiquement le liquide sous pression de l'orifice de commande de pression (4B) dans la phase d'injection ;
- un poussoir d'actionnement à entraînement hydraulique alternatif (28, 29) en contact avec la chambre de pression (27) et précontraint par une charge de ressort provenant d'un ressort de poussoir d'actionnement (28A, 29B) et étant conçu pour un mouvement qui est entraîné par le liquide sous pression dans la chambre de pression (27) dans la phase d'injection et conçu pour provoquer l'élévation de pression du lubrifiant dans la chambre avant (16D) au-dessus de la limite prédéterminée par son mouvement dans la phase d'injection ;
dans lequel le moteur comprend en outre un mécanisme de réglage de longueur de course pour régler de manière variable la longueur de course du poussoir d'actionnement à entraînement hydraulique alternatif (28, 29) ;
dans lequel le procédé comprend un fonctionnement cyclique
- dans la phase d'injection, la fourniture de liquide sous pression au niveau de l'orifice de commande de pression (4B) et dans la chambre de pression (27) en exerçant une force sur le poussoir d'actionnement (28, 29) par le liquide sous pression et par la force entraînant le poussoir d'actionnement (28, 29) en mouvement, par le mouvement provoquant une élévation de pression dans le volume de lubrifiant prédéterminé (16D) à l'intérieur de l'injecteur (4) et lors de l'élévation de pression au-dessus de la limite prédéterminée, le pompage de ce volume de lubrifiant prédéterminé à travers le système de soupape de sortie (15) et l'ouverture de buse (5') dans le cylindre (1) ;
- après la phase d'injection, la rétraction du poussoir d'actionnement (28, 29) en évacuant le liquide sous pression de la chambre sous pression (27) ;
- pendant la rétraction, le remplissage à nouveau de la chambre avant (16B) de lubrifiant pour une phase d'injection ultérieure ;
**caractérisé en ce que** le mécanisme de réglage de longueur de course est conçu pour un réglage variable de la quantité de liquide sous pression qui est évacuée de la chambre de pression (27) entre des phases d'injection et dans lequel le procédé comprend le réglage de la longueur de course entre des cycles d'injection en réglant la quantité de liquide sous pression qui est évacuée de la chambre sous pression (27) après la phase d'injection.

10. Procédé selon la revendication 9, dans lequel le mécanisme de réglage de longueur de course comprend un régulateur de pression (31C) pour réguler de manière variable une pression de ralenti dans la chambre de pression (27) entre les phases d'injection, dans lequel la pression de ralenti est inférieure à la limite de pression prédéterminée, pour ne contrebalancer que partiellement la charge de ressort du ressort de poussoir d'actionnement (28A, 29B) sur le poussoir d'actionnement (28, 29) et pour régler de manière variable une position rétractée pour le poussoir d'actionnement (28, 29) pour réguler ainsi la longueur de course du poussoir d'actionnement (28, 29) et la taille du volume de lubrifiant prédéterminé à injecter dans la phase d'injection ; dans lequel le procédé comprend, pendant de multiples cycles de fonctionnement, le réglage de la longueur de course en réglant la pression de ralenti par le régulateur de pression (31C).

11. Procédé selon la revendication 10, dans lequel le moteur comprend un conduit de retour (13) pour évacuer le liquide sous pression de l'orifice de commande de pression (4B) et du conduit de commande de pression (10) entre des phases d'injection, dans lequel le régulateur de pression (31C) fait partie d'une soupape de pression réglable (31) et dans lequel le procédé comprend un écoulement de liquide reliant le conduit de commande de pression (10) au conduit de retour (13) à travers la soupape de pression réglable (31) et le réglage de la pression de ralenti dans le conduit de commande de pression (10) et l'orifice de commande de pression (4B) et la chambre de pression (27) en réglant la pression entre le conduit de commande de pression (10) et le conduit de retour (13) par le régulateur de pression (31C) dans la soupape de pression réglable (31).

12. Procédé selon la revendication 11, dans lequel le moteur comprend un conduit d'alimentation (12) pour alimenter le conduit de commande de pression (10) en liquide sous pression ; dans lequel le mécanisme de réglage de longueur de course comprend en outre une soupape à bascule (30), la soupape à bascule (30) comprenant un orifice d'entrée de soupape à bascule (30A) relié à un conduit d'alimentation (12), un orifice de sortie de soupape à bascule (30B) relié au conduit de commande de pression (10), un orifice de retour de soupape à bascule (30C) relié au conduit de retour (13) par l'intermédiaire de la soupape de pression réglable (31), et un élément basculant (32) agencé pour basculer entre un premier état, dans lequel l'orifice d'entrée de soupape à bascule (30A) et l'orifice de sortie de soupape à bascule (30B) communiquent pour l'écoulement de liquide sous pression du conduit d'alimentation (12) à travers la soupape à bascule (30) et à travers le conduit de commande de pression (10) vers l'orifice de commande de pression (4B), et un second état, dans lequel l'orifice de sortie de soupape à bascule (30B) et l'orifice de retour de soupape à bascule (30C) communiquent pour l'évacuation de liquide sous pression du conduit de commande de pression (10) à travers la soupape à bascule (30) vers l'orifice de retour de soupape à bascule (30C), à travers la soupape de pression réglable (31) et vers le conduit de retour (13) ; dans lequel le procédé comprend dans le fonctionnement cyclique le basculement de la vanne entre le premier état dans la phase d'injection et le second état dans la phase de ralenti entre les phases d'injection.

13. Dispositif de commande (11) qui peut être relié électroniquement à un ordinateur ou qui comprend un ordinateur capable d'exécuter les étapes des revendications de procédé 9 à 12 pour un moteur lent à deux temps comprenant un cylindre (1) avec un piston alternatif à l'intérieur et avec une pluralité d'injecteurs de lubrifiant (4) répartis le long d'un périmètre du cylindre (1), dans lequel les injecteurs (4) comprennent un système de pompage à entraînement hydraulique pour l'injection de lubrifiant dans le cylindre (1) à diverses positions sur le périmètre pendant des phases d'injection ; dans lequel le dispositif de commande (11) est configuré pour alimenter en liquide sous pression l'injecteur (4) pour entraîner hydrauliquement le système de pompage dans l'injecteur de lubrifiant (4), dans lequel le dispositif de commande (11) comprend un mécanisme de réglage de longueur de course pour régler une longueur de course d'un poussoir d'actionnement (28, 29) dans le système de pompage à entraînement hydraulique dans l'injecteur de lubrifiant (4) ;
dans lequel le mécanisme de réglage de longueur de course dans le dispositif de commande (11) est conçu pour un réglage variable de la quantité de liquide sous pression qui est évacuée du système de pompage à commande hydraulique de l'injecteur (4) entre des phases d'injection.

14. Dispositif de commande selon la revendication 13, dans lequel le mécanisme de réglage de longueur de course comprend une soupape de pression réglable (31) et une soupape à bascule (30) ;
dans lequel la soupape de pression réglable (31) comprend un orifice d'entrée de soupape de pression (31A) et un orifice de sortie de soupape de pression (31B) et un régulateur de pression (31C) d'écoulement de fluide agencé entre eux pour régler une chute de pression entre l'orifice d'entrée de soupape de pression (31A) et l'orifice de sortie de soupape de pression (31B) ;
dans lequel la soupape à bascule (30) comprend
- un orifice d'entrée de soupape à bascule (30A) pour la liaison à un conduit d'alimentation en lubrifiant (12) du moteur,
- un orifice de sortie de soupape à bascule (30B) pour la liaison à un orifice de pression (4B) de l'injecteur de lubrifiant (4) à travers un conduit de commande (10) du moteur,
- un orifice de retour de soupape à bascule (30C) relié à l'orifice d'entrée de soupape de pression (31A) pour une liaison à un conduit de retour de lubrifiant (13) du moteur à travers la soupape de pression réglable (31), et
- un élément basculant (32) agencé pour basculer entre un premier état, dans lequel l'orifice d'entrée de soupape à bascule (30A) et l'orifice de sortie de soupape à bascule (30B) communiquent pour l'écoulement de liquide sous pression du conduit d'alimentation (12) à travers la soupape à bascule (30) et à travers le conduit de commande de pression (10) vers un orifice de commande de pression (4B) de l'injecteur (4), et un second état, dans lequel l'orifice de sortie de soupape à bascule (30B) et l'orifice de retour de soupape à bascule (30C) communiquent pour l'évacuation de liquide sous pression du conduit de commande de pression (10) vers le conduit de retour (13) par écoulement à travers l'orifice de sortie de soupape à bascule (30B), la soupape à bascule (30), l'orifice de retour de soupape à bascule (30C), l'orifice d'entrée de soupape de pression (31A), le régulateur de pression (31C) dans la soupape de pression réglable (31) et l'orifice de sortie de soupape de pression (31B).
